# EUROPEAN PATENT APPLICATION

(11) **EP 4 694 367 A1**
(43) Date of publication of application: **11.02.2026**
(21) Application number: 23931548.4
(22) Date of filing: 07.04.2023
(51) Int. Cl.: H04W 52/02

(54) **SIGNAL DETECTION METHODS AND APPARATUS, SIGNAL TRANSCEIVING APPARATUS, TERMINAL DEVICE AND NETWORK DEVICE**

(71) Applicant: GUANGDONG OPPO MOBILE TELECOMMUNICATIONS CORP., LTD., Dongguan, Guangdong 523860 (CN)
(72) Inventor: CUI, Shengjiang, Dongguan, Guangdong 523860 (CN)
(74) Representative: Penza, Giancarlo
(86) International application number: PCT/CN2023/087046
(87) International publication number: WO 2024/207487

(57) **Abstract**

The embodiments of the present application provide signal detection methods and apparatus, a signal transceiving apparatus, a terminal device and a network device. The method comprises: a terminal device detecting a first signal, the first signal being used for determining whether to detect a second signal, and/or determining a time domain resource and/or frequency domain resource for detecting the second signal, wherein the second signal is used for waking up a main receiver of the terminal device.

## Description

### TECHNICAL FIELD

Embodiments of the present disclosure relate to the technical field of mobile communication, in particular to methods and an apparatus for signal detection, an apparatus for signal transceiving, a terminal device, and a network device.

### BACKGROUND

In practical applications, the terminal device may turn off the main radio, and wake up the main radio by receiving a Wake Up Signal (WUS) through the secondary radio with extremely low power consumption/complexity, thereby reducing the power consumption of the terminal device. However, the time when the terminal device receives the WUS through the secondary radio may not match the clock of the network device, and there is a clock drift between the determined monitoring occasion of the WUS and the sending occasion of the WUS of the network device, which will affect the reliability of detecting the WUS.

### SUMMARY

Embodiments of the present disclosure provide methods and an apparatus for signal detection, an apparatus for signal transceiving, a terminal device, and a network device.

An embodiment of the present disclosure provides a method for signal detection. The method includes the following operation.

A terminal device detects the first signal. The first signal is used for determining whether to detect the second signal, and/or used for determining a time domain resource and/or a frequency domain resource for detecting the second signal. The second signal is used to wake up a main radio of the terminal device.

Another embodiment of the present disclosure provides a method for signal detection. The method includes the following operation.

A network device sends the first signal. The first signal is used for a terminal device to determine whether to detect the second signal, and/or to determine a time domain resource and/or a frequency domain resource for detecting the second signal. The second signal is used to wake up a main radio of the terminal device.

An embodiment of the present disclosure provides an apparatus for signal detection. The apparatus is applied to a terminal device. The apparatus includes a detection unit.

The detection unit is configured to detect the first signal. The first signal is used for determining whether to detect the second signal, and/or used for determining a time domain resource and/or a frequency domain resource for detecting the second signal. The second signal is used to wake up a main radio of the terminal device.

Another embodiment of the present disclosure provides an apparatus for signal transceiving. The apparatus is applied to a network device. The apparatus includes a transceiver unit.

The transceiver unit is configured to send the first signal. The first signal is used for a terminal device to determine whether to detect the second signal, and/or to determine a time domain resource and/or a frequency domain resource for detecting the second signal. The second signal is used to wake up a main radio of the terminal device.

A communication device provided by an embodiment of the present disclosure may be a terminal device or a network device according to the above solution. The communication device includes a processor and a memory. The memory is configured to store a computer program, and the processor is configured to invoke and execute the computer program stored in the memory to perform the above method for signal detection.

A chip provided by an embodiment of the present disclosure is used for implementing the above method for signal detection.

Specifically, the chip includes a processor for invoking and executing a computer program from a memory to cause a device on which the chip is mounted to perform the above method for signal detection.

A compute readable storage medium provided by an embodiment of the present disclosure is used for storing a computer program that causes a computer to execute the above method for signal detection.

A computer program product provided by an embodiment of the present disclosure includes computer program instructions that cause a computer to execute the above method for signal detection.

A computer program provided by an embodiment of the present disclosure causes the computer to execute the above method for signal detection when it is executed on the computer.

The embodiments of the present disclosure provide methods for signal detection. The terminal device may detect the first signal. The first signal is used for determining whether to detect the second signal, and/or used for determining a time domain resource and/or a frequency domain resource for detecting the second signal. The second signal is used to wake up the main radio of the terminal device. It can be seen that the terminal device can determine, according to the first signal, whether to receive the second signal for waking up the main radio of the terminal device, and/or determine the time-frequency resource for receiving the second signal, that is, the first signal can assist in receiving the second signal, so that the time-frequency resource for the terminal device to detect the second signal is clarified, the complexity of detecting the second signal is reduced, the power consumption caused by continuously detecting the second signal is reduced, and the performance of detecting the second signal is improved.

### BRIEF DESCRIPTION OF THE DRAWINGS

The accompanying drawings described herein are intended to provide a further understanding of the present disclosure and constitute a part of the present disclosure, and the schematic embodiments of the present disclosure and the description thereof are intended to explain the present disclosure, and do not constitute an undue limitation of the present disclosure. The drawings are described in the following.
FIG. 1 is a schematic diagram of a communication architecture according to an embodiment of the present disclosure.
FIG. 2 is a schematic diagram of an association relationship between Paging Early Indication occasion (PEI-O) and Paging Occasion (PO) according to an embodiment of the present disclosure.
FIG. 3 is a schematic diagram of the detection principle of Low Power Wake Up Receiver (LP-WUS) in the prior art according to an embodiment of the present disclosure.
FIG. 4 is a schematic flowchart of a method for signal detection according to an embodiment of the present disclosure.
FIG. 5A to FIG. 5D are schematic diagrams of frequency domain distribution relationship between the first signal and the second signal according to an embodiment of the present disclosure.
FIG. 6 is a schematic diagram of one-to-one association between first signal(s) and second signal(s) according to an embodiment of the present disclosure.
FIG. 7A to FIG. 7B are first schematic diagrams of one-to-many association between a first signal and second signals according to an embodiment of the present disclosure.
FIG. 8 is the second schematic diagram of one-to-many association between a first signal and second signals according to an embodiment of the present disclosure.
FIG. 9A to FIG. 9B are first schematic diagrams of many-to-one association between first signals and a second signal according to an embodiment of the present disclosure;
FIG. 10 is the second schematic diagram of many-to-one association between first signals and a second signal according to an embodiment of the present disclosure.
FIG. 11 is a schematic diagram of periodic transmission of the first signal according to an embodiment of the present disclosure.
FIG. 12 is a schematic diagram of transmission of the first signal in on duration within each transmission cycle in discontinuous reception (DRX) cycles according to an embodiment of the present disclosure;
FIG. 13A to FIG. 13B are schematic diagrams of determining a time domain resource and/or a frequency domain resource for detecting the second signal according to an embodiment of the present disclosure.
FIG. 14 is a schematic diagram of the structure and composition of an apparatus 1400 for signal detection according to an embodiment of the present disclosure.
FIG. 15 is a schematic diagram of the structure and composition of an apparatus 1500 for signal transceiving according to an embodiment of the present disclosure.
FIG. 16 is a schematic structural diagram of a communication device according to an embodiment of the present disclosure.
FIG. 17 is a schematic structural diagram of a chip according to an embodiment of the present disclosure.
FIG. 18 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all the embodiments. Based on the embodiments in the present disclosure, all other embodiments obtained by those skilled in the art without creative work fall within the scope of protection of the present disclosure.

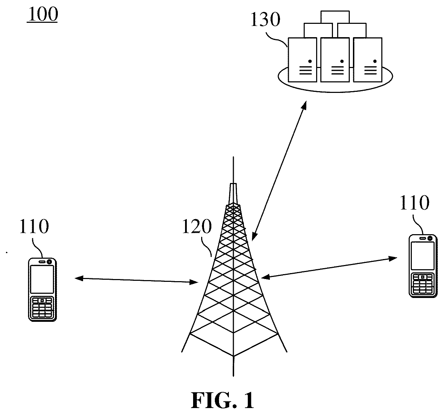

FIG. 1 is a schematic diagram of an application scenario according to an embodiment of the present disclosure.

As illustrated in FIG. 1, the communication system 100 may include terminal devices 110 and a network device 120. The network device 120 may communicate with the terminal device 110 through an air interface. Multi-service transmission is supported between the terminal device 110 and the network device 120.

It should be understood that the embodiments of the present disclosure are only illustrated with reference to the communication system 100, but the embodiments of the present disclosure are not limited thereto. That is, the technical solutions of the embodiments of the present disclosure may be applied to various communication systems, such as a Long Term Evolution (LTE) system, an LTE Time Division Duplex (TDD), a Universal Mobile Telecommunication System (UMTS), an Internet of Things (IoT) system, a Narrow Band Internet of Things (NB-IoT) System, an enhanced Machine-Type Communications (eMTC) system, a 5G communication system (also referred to as a New Radio (NR) communication system), or future communication systems, etc.

In the communication system 100 illustrated in FIG. 1, the network device 120 may be an access network device that communicates with the terminal device 110. The access network device may provide communication coverage for a particular geographic area and may communicate with a terminal device 110 (for example, User Equipment (UE)) located within that coverage area.

The network device 120 may be an Evolutional Node B (eNB or eNodeB) in a Long Term Evolution (LTE) system, a Next Generation Radio Access Network (NG RAN) device, a base station (gNB) in an NR system, a radio controller in a Cloud Radio Access Network (CRAN), a relay station, an access point, a vehicle-mounted device, a wearable device, a hub, a switch, a bridge, a router, or a network device in a future evolved Public Land Mobile Network (PLMN).

The terminal device 110 may be any terminal device including, but not limited to, terminal devices connected with the network device 120 or other terminal devices using wired or wireless connections.

For example, the terminal device 110 may refer to an access terminal, UE, a subscriber unit, a subscriber station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

The terminal device 110 may be used for Device to Device (D2D) communication.

The wireless communication system 100 may further include a core network device 130 that communicates with the base station, and the core network device 130 may be a 5G Core (5GC) device, for example, an Access and Mobility Management Function (AMF), an Authentication Server Function (AUSF), a User Plane Function (UPF), or a Session Management Function (SMF). Alternatively, the core network device 130 may also be an Evolved Packet Core (EPC) device of the LTE network, for example, a Session Management Function + Core Packet Gateway (SMF + PGW-C) device. It should be understood that the SMF + PGW-C may simultaneously implement functions capable of the SMF and the PGW-C. In the process of network evolution, the above core network device may be called by other names, or a new network entity may be formed by dividing the functions of the core network, which is not limited by the embodiments of the present disclosure.

The respective functional units in the communication system 100 may also establish a connection between each other through a next generation network (NG) interface to achieve communication.

For example, the terminal device establishes an air interface connection with the access network device through a NR interface for transmitting user plane data and control plane signaling. The terminal device may establish a control plane signaling connection with the AMF through the NG interface 1 (N1 for short). The access network device, such as a next generation radio access base station (gNB), may establish a user plane data connection with the UPF through an NG interface 3 (N3 for short). The access network device may establish a control plane signaling connection with the AMF through an NG interface 2 (N2 for short). The UPF may establish a control plane signaling connection with the SMF through a NG interface 4 (N4 for short). The UPF may interact user plane data with the data network through a NG interface 6 (N6 for short). The AMF may establish a control plane signaling connection with the SMF through a NG interface 11 (N11 for short). The SMF may establish a control plane signaling connection with the PCF through a NG interface 7 (N7 for short).

FIG. 1 exemplarily illustrates one base station, one core network device, and two terminal devices. Alternatively, the wireless communication system 100 may include multiple base station devices and another number of terminal devices may be included within the coverage range of each base station, which is not limited in the embodiments of the present disclosure.

**It** should be noted that FIG. 1 only illustrates a system applicable to the present disclosure in the form of an example, and of course, the method shown in the embodiments of the present disclosure may also be applied to other systems. Further, the terms "system" and "network" are often used interchangeably herein. Herein, the term "and/or" is only used for describing an association relationship between association objects, and means that there may be three relationships, for example, A and/or B, which may mean that A exists alone, A and B exist simultaneously, and B exists alone. In addition, the character "/" herein generally indicates that there is an "or" relationship between the association objects. It should also be understood that the "indication" mentioned in the embodiments of the present disclosure may be a direct indication, an indirect indication, or represent an association relationship. For example, A indicates B, which may mean that A indicates B directly, for example, B may be acquired by A. It may also represent that A indicates B indirectly, for example, A indicates C, and B may be acquired through C. It may also represent that there is an association relationship between A and B. It should also be understood that "correspondence" mentioned in the embodiments of the present disclosure may represent that there is a direct correspondence or indirect correspondence between the two objects, may represent that there is an association relationship between the two objects, or may represent a relationship between indicating and being indicated, configuring and being configured, or the like. It should also be understood that the "predefined" or "predefined rules" mentioned in the embodiments of the present disclosure may be implemented by storing corresponding codes, tables, or other methods that may be used to indicate relevant information in advance in devices (for example, including terminal devices and network devices), and the present disclosure does not limit specific implementations thereof. For example, "predefined" may refer to being defined in the protocol. It should also be understood that in the embodiments of the present disclosure, the "protocol" may refer to a standard protocol in the field of communication, and may include, for example, an LTE protocol, an NR protocol, and related protocols applied in future communication systems, which is not limited in the present disclosure.

In order to facilitate understanding of the technical solutions of the embodiments of the present disclosure, the related technologies of the embodiments of the present disclosure will be described below, and the related technologies below may be arbitrarily combined with the technical solutions of the embodiments of the present disclosure as optional solutions, and all of them belong to the scope of protection of the embodiments of the present disclosure.

Hereinafter, Discontinuous Reception (DRX) is described.

DRX means that due to the burstiness of data packets, when there is no data transmission, the reception of downlink data may be stopped to reduce the power consumption of the terminal device. The terminal device may be configured with a DRX cycle. The DRX cycle consists of two parts: the activation period (On Duration) and the dormancy period (Opportunity for DRX). The terminal device may monitor and receive the Physical Downlink Control Channel (PDCCH) during the activation period, and may not receive the PDCCH during the dormancy period.

In the evolution of NR technology, a higher requirement is put forward for power saving of the terminal device. For example, for the existing DRX mechanism, during each On Duration, the terminal device needs to continuously detect the PDCCH to determine whether the base station schedules data transmission to itself. However, for most terminal devices, there may be no need to receive data transmission for a long time, but they still need to keep regular wake-up to monitor possible downlink transmissions. For such terminal devices, the power saving of terminal devices has room for further optimization.

In the standard evolution version R16, a power saving signal is introduced to achieve further power saving of the terminal device in the RRC_CONNECTED state. The power saving signal is used in combination with the DRX mechanism, and the terminal device may receive an indication of the power saving signal before On Duration. When the terminal device has data transmission in the upcoming On Duration, the network device "wakes up" the terminal device through the power saving signal, so as to monitor the PDCCH during the upcoming On Duration. Otherwise, the network device instructs the terminal to continue to "sleep" through the power saving signal, and the terminal device does not need to monitor the PDCCH during the upcoming On Duration. Compared with the existing DRX mechanism, when the terminal device does not have data transmission, the terminal device may omit monitoring of the PDCCH during the On Duration, thereby realizing power saving.

In the standardized evolution version R17, a terminal device power saving enhancement project is established to further standardize the power saving of the terminal device in RRC_IDLE state and RRC_INACTIVE state. The power consumption of the terminal device in the RRC_IDLE and RRC_INACTIVE states mainly comes from periodic discontinuous reception of paging, which includes power consumption of time-frequency synchronization recovery and Automatic Gain Control (AGC) before the arrival of the paging occasion, and power consumption of detecting the PDCCH for paging during the paging occasion. In order to reduce power consumption in the process of receiving paging, the R17 standard introduces a power saving signal for receiving paging, which is called Paging Early Indication (PEI), which is used to indicate whether the terminal device needs to receive paging at the paging occasion before the arrival of the paging occasion of the terminal device.

The PEI occasion (PEI-O) may be a set of multiple PDCCH monitoring occasions.

In some embodiments, when the terminal device is not configured with nrofPDCCH-MonitoringOccasionPerSSB-InPO, PEI-O may be a set of S consecutive PDCCH monitoring occasions. S is the number of actual transmitted Synchronization Signal Blocks (SSBs) determined according to ssb-PositionsInBurst in System Information Blockl (SIB1).

In the PEI-O, the quasi co-located (QCL) of the K-th PEI PDCCH monitoring occasion is the same as the K-th PDCCH monitoring occasion of the paging message in Paging Occasions (POs) (that is, the reference of QCL is SSB).

In some embodiments, in the unlicensed spectrum, the PEI-O is a set of (S * X) consecutive PDCCH monitoring occasions. S is the number of actual transmitted SSBs determined according to ssb-PositionsInBurst in SIB1. If nrofPDCCH-MonitoringOccasionPerSSB-InPO is configured, X takes the configured value, otherwise X = 1.

The (*x * S* + *K*)-th PDCCH monitoring occasion in PEI-O corresponds to the K-th transmitted SSB. Here, x = 0, 1,..., X-1 and K = 1, 2..., S.

If X > 1, when the terminal device detects a PEI in the PEI-O, the terminal device does not need to continue to monitor the subsequent monitoring occasion(s) associated with the PEI-O.

Hereinafter, the mapping relationship between PEI and PO is described in detail.

The network device may configure multiple POs for each Paging Frame (PF). If each PEI corresponds to one PO, there will be a large number of independent PEIs, which will increase the overhead of PEIs. In addition, the PEIs corresponding to these POs may overlap in the time domain. In R15/R16, one WUS may be associated with one PO or more POs. When designing PEI, in order to reduce overhead of PEIs and avoid overlap between PEIs, a mapping mechanism similar to WUS is finally determined, that is, one PEI may be associated with one PO or more POs. The specific design is as follows.

It is supported that one PEI is associated with POnumPerPEI POs.

POnumPerPEI POs associated with the PEI may be in one or more PFs, and the maximum number of PFs associated with one PEI is 2.

POnumPerPEI is a factor of (*N * N_{S}*). *N* is the number of PFs in a paging cycle, and *N_{S}* is the number of POs in one PF. POnumPerPEI may be configured through SIB, and the value range is {1, 2, 4, 8}.

The terminal device may determine the position of the PEI-O corresponding to the PO based on the reference point and the offset value (from the reference point to the first PDCCH monitoring occasion in the PEI-O).

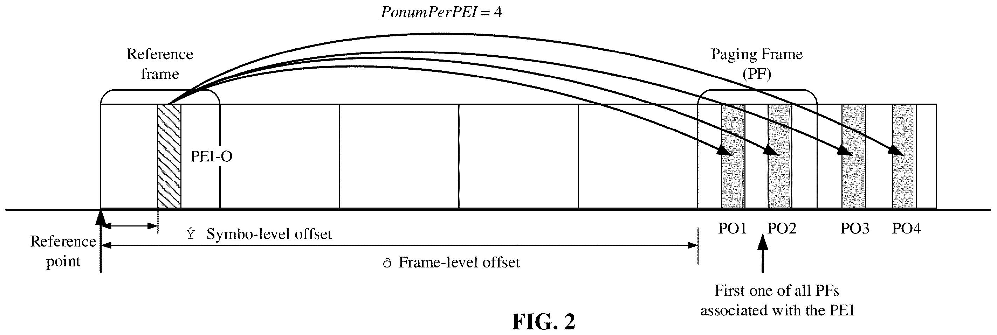

Firstly, a reference frame is determined, and the starting point of the reference frame is used as a reference point. Exemplarily, referring to the schematic diagram of the association relationship between PEI-O and PO illustrated in FIG. 2, each PEI may be associated with 4 POs. The terminal device may determine the reference frame through a frame-level offset based on the first PF among all PFs associated with the PEI (in the case that one PEI is associated multiple POs, the associated POs may be located in different PFs). The frame-level offset from the first PF among all PFs associated with the PEI to the reference frame is configured through the SIB.

Next, the terminal device may determine the position of the first PDCCH monitoring occasion in the PEI-O based on the reference point and the symbol-level offset. The symbol-level offset from the reference point to the first PDCCH monitoring occasion in the PEI-O may be configured through the SIB, and the specific offset value is provided by firstPDCCH-MonitoringOccasionOfPEI-O.

In the study of the R18 standardized version, further power saving treatment of the terminal device will be studied in depth. Currently, the introduction of Low Power Wake Up Receiver (LP-WUR) is considered. It should be understood that the LP-WUR is simple to implement, has low device complexity, and is in a low power operation mode. The LP-WUR can work continuously and monitor the Low Power Wake Up Signal (LP-WUS). When receiving the LP-WUS sent by the network device to the terminal device or to the terminal group where the terminal device is located, the LP-WUR wakes up the main radio of the terminal device. Generally, the LP-WUR can continuously monitor the LP-WUS, or monitor the LP-WUS discontinuously in a duty-cycle manner.

In practical applications, there may be a timing error between clocks of the network device and the LP-WUR, which will lead to the timing mismatch between the terminal device and the network device. For example, the network device sends the LP-WUS at the corresponding LP-WUS sending occasion according to its own clock, and due to the time mismatch, there is a clock drift between the LP-WUS monitoring occasion determined according to the clock of the LP-WUR and the LP-WUS sending occasion of the network device, which will affect the reliability of detecting the LP-WUS.

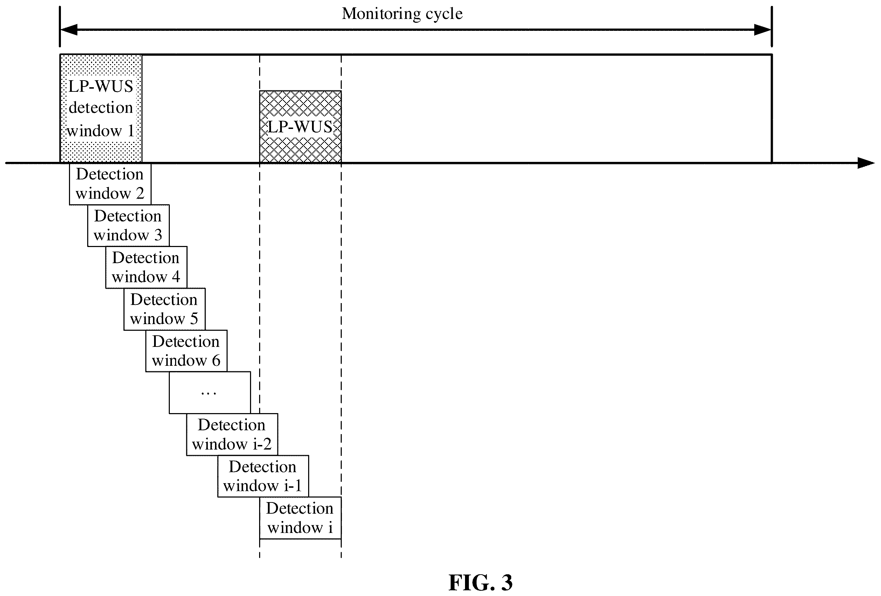

In particular, referring to FIG. 3, when the LP-WUR cannot accurately determine the time domain position of the LP-WUS, it is often needed to detect the LP-WUS, in a monitoring cycle, in a manner of using sliding window. It should be noted that for the detection of LP-WUS, it is needed to slide the window at each sampling point, which has high detection complexity and large power consumption.

Based on this, the embodiments of the present disclosure provide a method for signal detection. The terminal device may detect the first signal. The first signal is used for determining whether to detect the second signal, and/or used for determining a time domain resource and/or a frequency domain resource for detecting the second signal. The second signal is used to wake up the main radio of the terminal device. It can be seen that the terminal device can determine, according to the first signal, whether to receive the second signal for waking up the main radio of the terminal device, and/or determine the time-frequency resource for receiving the second signal, that is, the first signal can assist in reception of the second signal, so that the time-frequency resource for the terminal device to detect the second signal is clarified, the complexity of detecting the second signal is reduced, the power consumption caused by continuously detecting the second signal is reduced, and the performance of detecting the second signal is improved.

In order to facilitate understanding of the technical solutions of the embodiments of the present disclosure, the technical solutions of the present disclosure will be described in detail below with reference to specific embodiments. The above related technologies may be arbitrarily combined with the technical solutions of the embodiments of the present disclosure as optional solutions, and all of them belong to the scope of protection of the embodiments of the present disclosure. Embodiments of the present disclosure include at least a part of the following contents.

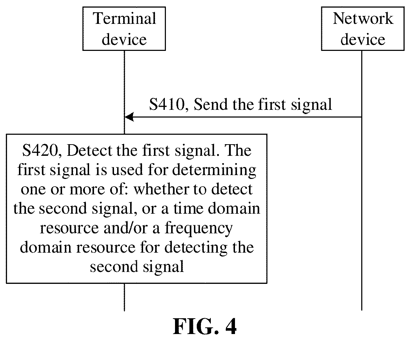

FIG. 4 illustrates the method for signal detection according to an embodiment of the present disclosure. The method may include the following operations.

In operation S410, a network device sends the first signal.

In operation S420, a terminal device detects the first signal. The first signal is used for determining one or more of: whether to detect the second signal, and a time domain resource and/or a frequency domain resource for detecting the second signal. The second signal is used to wake up a main radio of the terminal device.

It should be understood that the terminal device may include a main radio and a secondary radio. The main radio may be turned off when there is no data transmission requirement, and the signal from the network device is detected/monitored only by the secondary radio with lower complexity and lower cost. When there is data transmission requirement, the network device may send the second signal to the terminal device for waking up the main radio, so that the terminal device may start the main radio according to the second signal, to perform data transmission.

It should be noted that the second signal may be a WUS, a power saving signal, a LP-WUS, or the like mentioned in the above embodiments, and the second signal may be another signal having a function of waking up the main radio of the terminal device, which is not limited in the embodiments of the present disclosure.

In order to reduce the complexity and power consumption of detecting/monitoring the second signal, and improve the detection performance of the second signal, in the embodiments of the present disclosure, the network device may send the first signal to the terminal device, and the second signal is received with the assistance of the first signal.

It may be understood that the first signal may be referred to as a signal for assisting in monitoring the second signal, a signal for assisting the LP-WUR in monitoring, a signal for assisting in monitoring the LP-WUS, or an assistant signal.

Here, the first signal may be a sequence signal or a signal carrying control information, which is not limited in the embodiments of the present disclosure.

It should be understood that the network device may send the first signal to the terminal device, and accordingly, the terminal device may detect the first signal from the network device.

It should be noted that the terminal device may detect/monitor the first signal from the network device through the secondary radio. The secondary radio may be the wake up receiver or the LP-WUR mentioned in the above embodiment, and the secondary radio may be another receiver that supports lower power consumption and lower complexity, which is not limited in the embodiments of the present disclosure.

It should also be noted that the resource for detecting the first signal may be preconfigured or dynamically configured, which is not limited in the embodiments of the present disclosure.

In the embodiments of the present disclosure, the terminal device may determine, based on the detected first signal, whether to detect the second signal and/or the time-frequency resource for detecting the second signal.

It should be noted that the time-frequency resource may refer to a time domain resource and/or a frequency domain resource, or may refer to a transmission occasion, which is not limited in the embodiments of the present disclosure.

In the embodiments of the present disclosure, the detection of the first signal by the terminal device may include one or more of the following: power consumption required by the terminal device to detect the first signal being less than power consumption required to detect the second signal; a complexity of detecting the first signal by the terminal device being less than a complexity of detecting the second signal; a detection window of the first signal being smaller than a detection window of the second signal; and a bandwidth of the first signal being less than a bandwidth of the second signal.

It may be understood that the first signal is a signal that assists in receiving the second signal. One or more of the power consumption, complexity, detection window, and signal bandwidth required by the terminal device to detect/monitor the first signal is better than the power consumption, complexity, detection window, or signal bandwidth required by the terminal device to detect/monitor the second signal.

It should be noted that in addition to that the first signal may be used for determining whether to receive the second signal, and/or used for determining the time-frequency resource for detecting the second signal, the first signal may also used by the terminal device to perform clock calibration and/or time-frequency synchronization.

It may be understood that the terminal device may detect the first signal before detecting the second signal. The terminal device may use the time-frequency resource of the detected first signal to perform clock calibration and/or time-frequency synchronization to ensure subsequent accurate reception of the second signal.

It can be seen that in the method for detecting the signal provided by the embodiment of the present disclosure, the terminal device may detect the first signal. The first signal is used for determining whether to detect the second signal, and/or used for determining a time domain resource and/or a frequency domain resource for detecting the second signal. The second signal is used to wake up the main radio of the terminal device. It can be seen that the terminal device can determine, according to the first signal, whether to receive the second signal for waking up the main radio of the terminal device, and/or determine the time-frequency resource for receiving the second signal, that is, the first signal can assist in receiving the second signal, so that the time-frequency resource for the terminal device to detect the second signal is clarified, the complexity of detecting the second signal is reduced, the power consumption caused by continuously detecting the second signal is reduced, and the performance of detecting the second signal is improved.

In the embodiments of the present disclosure, the network device may send the first signal in the following two different manners.

### Manner 1

The network device sends first signal(s) before sending the second signal(s). Accordingly, the terminal device expects that the network device sends the first signal(s) before sending the second signal(s).

That is, the first signal(s) and the second signal(s) are bound. When the network device needs to send the second signal(s), the network device needs to send the first signal(s) before sending the second signal(s), and notifies the need of receiving the second signal(s) and the time-frequency resource(s) of the second signal(s) to the terminal device through the first signal(s). When the network device does not need to send the second signal(s), the first signal(s) may not be sent.

It should be understood that when the first signal(s) is detected by the terminal device, the terminal device may determine to detect the second signal(s), and/or, may determine, based on the first signal(s), the time domain resource(s) and/or the frequency domain resource(s) for detecting the second signal(s). Otherwise, the terminal device may not detect the second signal(s) to reduce power consumption of the terminal device.

The terminal device may determine the time-frequency resource(s) for detecting the second signal(s) according to the time-frequency resource(s) of the detected first signal(s). The terminal device may determine the time-frequency resource(s) for detecting the second signal(s) according to the resource indication information carried in the detected first signal(s), which is not limited in the embodiments of the present disclosure.

In some embodiments, the time domain resource(s) and/or the frequency domain resource(s) for detecting the second signal(s) may be determined based on the first association relationship between the first signal(s) and the second signal(s).

The first association relationship may include any one of: one first signal being associated with one second signal; one first signal being associated with multiple second signals; and multiple first signals being associated with one second signal.

It may be understood that the first signal may be associated with the second signal one-to-one (or referred to as one-to-one mapping), the first signal may be associated with the second signal one-to-many (or referred to as one-to-many mapping), or the first signal may be associated with the second signal many-to-one (or referred to as many-to-one mapping).

The fact that the first signal is associated with the second signal one-to-one may include one or more of following: a time domain resource of the first signal is associated with a time domain resource of the second signal; and a frequency domain resource of the first signal is associated with a frequency domain resource of the second signal.

In some embodiments, the time domain resource of the first signal being associated with the time domain resource of the second signal may include one or more of: a time domain length of the first signal being associated with a time domain length of the second signal; and a time domain position of the first signal being associated with a time domain position of the second signal.

It should be noted that the time domain length of the first signal and the time domain length of the second signal may be the same or different. When the time domain lengths are different, the time domain length of the second signal may be determined through the time domain length of the first signal in combination with the association relationship between time domain lengths.

The association relationship between time domain lengths may represent the association relationship between the time domain length of the first signal and the time domain length of the second signal. For example, the association relationship between time domain lengths may include that when the time domain length of the first signal is one time domain symbol, the corresponding time domain length of the second signal is two time domain symbols, and when the time domain length of the first signal is two time domain symbols, the corresponding time domain length of the second signal is four time domain symbols, etc.

It should be noted that the association relationship between time domain lengths may be specified in a protocol or may be configured in advance by a network device, which is not limited in the embodiments of the present disclosure.

In addition, the time domain position of the first signal is different from the time domain position of the second signal.

In some embodiments, the time domain position of the first signal may be associated with the time domain position of the second channel through a specified time interval.

It may be understood that there is a specified time interval ΔT between the time domain position of the first signal and the time domain position of the second signal. Here, ΔT ≥ 0.

It should be understood that the specified time interval refers to the time interval between the time domain position of the first signal and the time domain position of the second signal. The time domain position of the first signal may be any one of: a time domain starting position of the first signal; a time domain end position of the first signal; a time unit in which the time domain starting position of the first signal is located; or a time unit in which the time domain end position of the first signal is located.

Further, the time domain position of the second signal may be any one of: a time domain starting position of the second signal; a time domain end position of the second signal; a time unit in which the time domain starting position of the second signal is located; or a time unit in which the time domain end position of the second signal is located.

It should be noted that the above time unit may be a time unit such as a time domain symbol, a slot, a subframe, or the like, which is not limited in the embodiments of the present disclosure.

Here, the time domain symbol may be an Orthogonal Frequency Division Multiplexing (OFDM) symbol or another type of time domain symbol, which is not limited in the embodiments of the present disclosure.

It should be noted that specific definitions of the time domain position of the first signal and the time domain position of the second signal may be specified in a protocol.

In some embodiments, the unit of the above specified time interval ΔT may be an absolute time unit, such as microseconds (us), milliseconds (ms), seconds (s), or the like. The unit of the specified time interval ΔT also may be a relative time unit, such as a time domain symbol, a slot, a subframe, or the like. The unit of the specified time interval ΔT is not limited in the embodiments of the present disclosure.

It should be noted that in a case that the unit of the specified time interval ΔT is a relative time unit, the specified time interval ΔT may be composed of time units of one time level or may be composed of time units of multiple time levels. For example, the specified time interval ΔT may be composed of X slots + Y symbols. Here, X and Y are both integers greater than or equal to 1.

In some embodiments, the specified time interval may be determined by one or more of: a preset rule, provision(s) in a protocol, and second configuration information sent by the network device. The second configuration information is carried by dedicated signaling or by the first signal.

It should be understood that the specified time interval may be stipulated by the protocol. For example, it is directly stipulated in the protocol that the interval between the time domain position of the first signal and the time domain position of the second signal is 0.5 us, 0.5 ms, 0.5 s, or 2 time domain symbols, 2 slots, or 2 subframes, etc.

Further, the specified time interval may be determined according to the preset rule. For example, the specified time interval may be determined through the time domain position of the detected first signal, and the time interval A is used as the time interval between the time domain positions of the first signal and the second signal if the first signal is detected in the first half of the slot, and the time interval B is used as the time interval between the time domain positions of the first signal and the second signal if the first signal is detected in the second half of the slot.

The specified time interval may be configured by the network device. The network device may semi-statically configure/indicate the specified time interval or dynamically configure/indicate the specified time interval.

The network device may send the second configuration information to the terminal device, and the second configuration information may include the above specified time interval.

In some embodiments, the second configuration information may be transmitted through dedicated signaling, higher layer signaling (for example, Radio Resource Control (RRC) signaling), or physical layer signaling (for example, downlink control information (DCI)), which is not limited in the embodiments of the present disclosure.

In some embodiments, the second configuration information may be carried by the first signal.

It should be noted that the second configuration information may include one time offset parameter, or may include multiple time offset parameters. That is, the specified time interval may be configured by one time offset parameter or may be configured by multiple time offset parameters. For example, in a case that the specified time interval ΔT may be composed of time units of one time level, the second configuration information may include only one time offset parameter, and in a case that the specified time interval is composed of time units of multiple time levels, the second configuration information may include multiple time offset parameters, and each time offset parameter corresponds to one time level.

In some embodiments, the fact that the frequency domain resource of the first signal is associated with the frequency domain resource of the second signal may include one or more of the following: a frequency domain bandwidth of the first signal is associated with a frequency domain bandwidth of the second signal; and a frequency domain position of the first signal is associated with a frequency domain position of the second signal.

The frequency domain bandwidth of the first signal and the frequency domain bandwidth of the second signal may be the same or different. When the frequency domain bandwidths are different, the frequency domain bandwidth of the second signal may be determined through the frequency domain bandwidth of the first signal in combination with the association relationship between frequency domain bandwidths.

The association relationship between frequency domain bandwidths may represent an association relationship between the frequency domain bandwidth of the first signal and the frequency domain bandwidth of the second signal. For example, the association relationship between frequency domain bandwidths may include that when the frequency domain bandwidth of the first signal is one subcarrier, the corresponding frequency domain bandwidth of the second signal is two subcarriers, and when the frequency domain bandwidth of the first signal is two subcarriers, the corresponding frequency domain bandwidth of the second signal is four subcarriers.

It should be noted that the association relationship between frequency domain bandwidths may be stipulated in a protocol or may be configured in advance by a network device, which is not limited in the embodiments of the present disclosure.

In the embodiments of the present disclosure, the frequency domain position of the first signal and the frequency domain position of the second signal may be the same or different, which is not limited in the embodiments of the present disclosure.

In some embodiments, the frequency domain position of the first signal may be associated with the frequency domain position of the second signal through a specified frequency domain interval.

It may be understood that there is a specified frequency domain interval ΔF between the frequency domain position of the first signal and the frequency domain position of the second signal. Here, ΔF ≥ 0.

In some embodiments, the frequency domain position of the first signal may include any one of: a position of a frequency domain center frequency of the first signal; a frequency domain starting position of the first signal; a frequency domain end position of the first signal; a frequency domain unit in which the frequency domain starting position of the first signal is located; or a frequency domain unit in which the frequency domain end position of the first signal is located.

In addition, in some embodiments, the frequency domain position of the second signal may include any one of: a position of a frequency domain center frequency of the second signal; a frequency domain starting position of the second signal; a frequency domain end position of the second signal; a frequency domain unit in which the frequency domain starting position of the second signal is located; or a frequency domain unit in which the frequency domain end position of the second signal is located.

It should be noted that the above frequency domain unit may be a subcarrier, a subcarrier group, a Resource Block (RB), or other frequency domain unit, which is not limited in the embodiments of the present disclosure.

In some embodiments, the unit of above specified frequency domain interval ΔF may be an absolute frequency domain unit, such as hertz (Hz), kHz, MHz, etc. The unit of the specified frequency domain interval ΔF also may be a relative frequency domain unit, such as a subcarrier, a subcarrier group, a RB, etc. The unit of the specified frequency domain interval ΔF is not limited in the embodiments of the present disclosure.

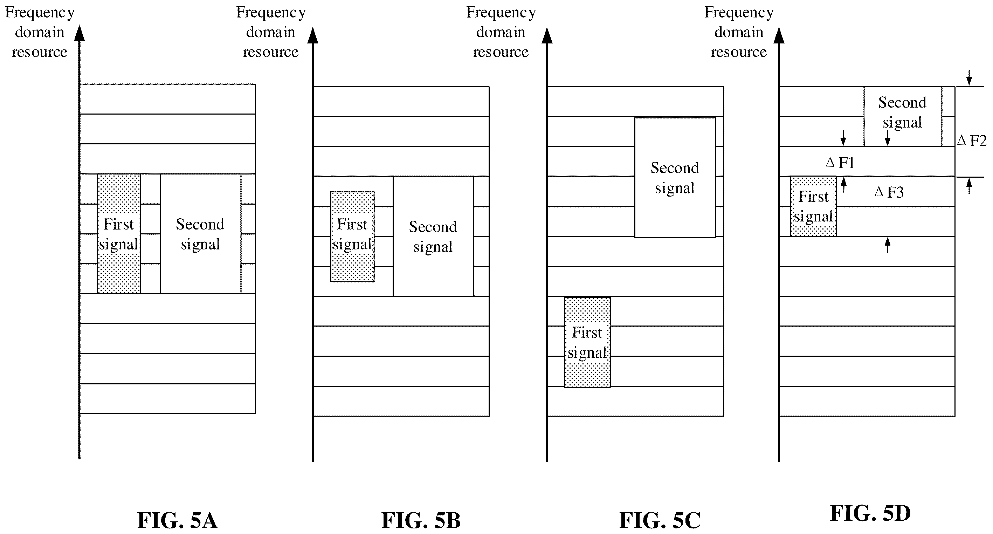

Several frequency domain distributions of the first signal and the second signal are exemplarily described below. Referring to FIG. 5A, the frequency domain resources of the first signal and the second signal are the same (the frequency domain bandwidths and the frequency domain positions are the same). Referring to FIG. 5B, the center frequencies of the first signal and the second signal are the same, but the frequency domain bandwidths are different (that is, the frequency domain bandwidths are different, and the frequency domain positions are the same). Referring to FIG. 5C, the frequency domain bandwidths of the first signal and the second signal are different, and the frequency domain positions are different too. Referring to FIG. 5D, the frequency domain bandwidths of the first signal and the second signal are the same, and the frequency domain positions are different.

As illustrated in FIG. 5D, when the frequency domain end position of the first signal is taken as the frequency domain position of the first signal and the frequency domain starting position of the second signal is taken as the frequency domain position of the second signal, the specified frequency domain interval between the first signal and the second signal may be ΔF1. When the frequency domain end positions of the first signal and the second signal are taken as the respective frequency domain positions, the specified frequency domain interval between the first signal and the second signal may be ΔF2. When the frequency domain starting position of the first signal is taken as the frequency domain position of the first signal and the frequency domain starting position of the second signal is taken as the frequency domain position of the second signal, the specified frequency domain interval between the first signal and the second signal may be ΔF3.

In some embodiments, the specified frequency domain interval may be determined by one or more: a preset rule, provision(s) in a protocol, and second configuration information sent by the network device.

In some embodiments, the second configuration information may be transmitted through dedicated signaling, higher layer signaling (for example, RRC signaling), or physical layer signaling (for example, DCI), which is not limited in the embodiments of the present disclosure.

In some embodiments, the second configuration information may be carried by the first signal.

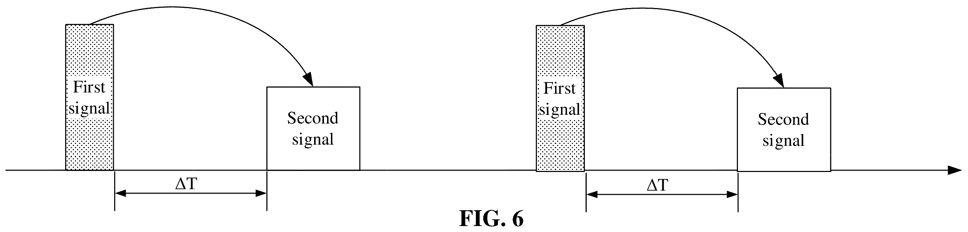

It may be understood that when the first signal is associated with the second signal one-to-one, referring to FIG. 6, when the network device sends the second signal, the network device may send one first signal before sending the second signal, otherwise not send the first signal.

In summary, the terminal device may firstly detect/monitor the first signal before detecting/monitoring the second signal. If the first signal is not detected, the terminal device may not detect the second signal. In this way, the terminal device can avoid continuously monitoring the second signal, so as to reduce power consumption of the terminal device. If the first signal is detected, the terminal device may detect/monitor the second signal on a corresponding time domain and/or frequency domain resource according to the association relationship between the first signal and the second signal. In this way, the terminal device can accurately determine the time-frequency position for detecting the second signal, the clock drift is avoided to a certain extent, and the reliability of detecting the second signal is improved.

In the embodiment of the present disclosure, the fact that the first signal is associated with the second signal one-to-many may include one or more of following: a time domain resource of the first signal is associated with time domain resources of the multiple second signals; and a frequency domain resource of the first signal is associated with frequency domain resources of the multiple second signals.

In some embodiments, the fact that the time domain resource of the first signal is associated with the time domain resources of the multiple second signals includes one or more of following: a time domain length of the first signal is associated with time domain lengths of the multiple second signals; and the time domain position of the first signal is associated with the time domain positions of the multiple second signals.

It should be noted that the time domain lengths of the multiple second signals associated with the first signal may be the same or different. When the time domain lengths of the multiple second signals are different, the time domain length of each second signal may be stipulated by the protocol or configured semi-statically by the network device, which is not limited in the embodiments of the present disclosure.

In some embodiments, the time domain length of the first signal may be the same as the time domain lengths of the multiple second signals.

In some embodiments, the time domain length of the first signal may be different from the time domain lengths of the multiple second signals. If the time domain lengths of the multiple second signals are the same, the time domain lengths of the multiple second signals may be determined through the time domain length of the first signal in combination with the association relationship between time domain lengths. If the time domain lengths of the multiple second signals are different, the time domain length of a specific one (for example, the first one of the multiple second signals or the last one of the multiple second signals) of the multiple second signals may be determined through the time domain length of the first signal in combination with the association relationship between time domain lengths, and then the time domain lengths of other second signals may be determined according to a preset rule (for example, the time domain lengths of two adjacent second signals differ by 0.5 us) and the time domain length of the specific second signal.

It should be noted that the association relationship between time domain lengths may be stipulated in a protocol or may be configured in advance by a network device, which is not limited in the embodiments of the present disclosure.

In some embodiments, the fact that the time domain position of the first signal is associated with the time domain positions of the multiple second signals includes: that the time domain position of the first signal is associated with the time domain positions of the multiple second signals respectively through multiple specified time intervals, different second signals corresponding to different specified time intervals; or that the time domain position of the first signal is associated with the time domain positions of the multiple second signals through a specified time interval, the time interval between time domain positions of any two adjacent second signals among the multiple second signals being the same.

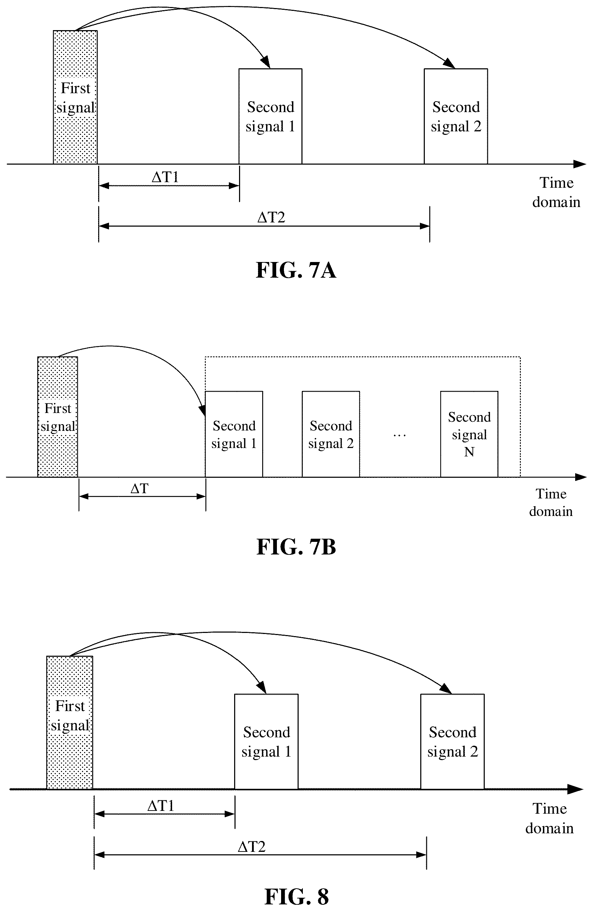

In one possible implementation, the first signal may be associated with multiple second signals through multiple specified time intervals. The specified time intervals between the different second signals and the first signal are different. Exemplarily, referring to FIG. 7A, the first signal may be associated with two second signals. Specifically, the first signal may be associated with the second signal 1 through ΔT1, and the first signal may be associated with the second signal 2 through ΔT2.

In another possible implementation, the time domain position of the first signal may be associated with the time domain positions of the multiple second signals through a specified time interval. The specified time interval may be a time interval between the time domain position of the first signal and a time domain position of a specific one of the multiple second signals. Exemplarily, referring to FIG. 7B, the first signal is associated with N second signals through ΔT, N being an integer greater than 2. Here, ΔT may be a time interval between the time domain position of the first signal and the time domain position of the second signal 1 among the multiple second signals. The terminal device may determine the time domain position of each second signal based on the time interval between two adjacent second signals and ΔT.

It should be noted that the time interval between two adjacent second signals may be stipulated in a protocol or configured by a network, which is not limited in the embodiments of the present disclosure.

It should also be noted that for the fact that the first signal is associated with the second signals through a specified time interval, the reference may be made to the related description in the above embodiment, and the description thereof will not be repeated here for the sake of brevity.

In some embodiments, the fact that the frequency domain resource of the first signal is associated with the frequency domain resources of the multiple second signals includes one or more of following: a frequency domain bandwidth of the first signal is associated with frequency domain bandwidths of the multiple second signals; and a frequency domain position of the first signal is associated with frequency domain positions of the multiple second signals.

It should be noted that the frequency domain bandwidths of the multiple second signals associated with the first signal may be the same or different. In a case that the frequency domain bandwidths of the multiple second signals are different, the frequency domain bandwidth of each second signal may be stipulated in a protocol or semi-statically configured by a network device, which is not limited in the embodiments of the present disclosure.

In some embodiments, the frequency domain bandwidth of the first signal may be the same as the frequency domain bandwidths of the multiple second signals.

In some embodiments, the frequency domain bandwidth of the first signal may be different from the frequency domain bandwidths of the multiple second signals. If the frequency domain bandwidths of the multiple second signals are the same, the frequency domain bandwidths of the multiple second signals may be determined through the frequency domain bandwidth of the first signal in combination with the association relationship between frequency domain bandwidths. If the frequency domain bandwidths of the multiple second signals are different too, the frequency domain bandwidth of a specific one (for example, the first one of the multiple second signals or the last one of the multiple second signals) of the multiple second signals may be determined through the frequency domain bandwidth of the first signal in combination with the association relationship between frequency domain bandwidths, and then the frequency domain bandwidths of other second signals may be determined according to a preset rule (for example, the frequency domain bandwidth of two adjacent second signals is different by one subcarrier) and the frequency domain bandwidth of the specific second signal.

It should be noted that the association relationship between frequency domain bandwidths may be stipulated in a protocol or may be configured in advance by a network device, which is not limited in the embodiments of the present disclosure.

In the embodiments of the present disclosure, the frequency domain position of the first signal and the frequency domain positions of the multiple second signals may be the same or different. In a case that the frequency domain position of the first signal is different from the frequency domain positions of the multiple second signals, the fact that the frequency domain position of the first signal is associated with the frequency domain positions of the multiple second signals may include: the frequency domain position of the first signal is associated with the frequency domain positions of the multiple second signals through a specified frequency domain interval; or the frequency domain position of the first signal is associated with the frequency domain positions of the multiple second signals through multiple specified frequency domain intervals, different second signals corresponding to different specified frequency domain intervals.

In one possible implementation, the first signal may be associated with multiple second signals through multiple specified frequency domain intervals. The specified time intervals between the different second signals and the first signal are different.

In another possible implementation, the frequency domain position of the first signal may be associated with the frequency domain positions of the multiple second signals through a specified frequency domain interval. The specified frequency domain interval may be a frequency domain interval between the frequency domain position of the first signal and a frequency domain position of a specific one of the multiple second signals. The specified frequency domain interval may be a time interval between the frequency domain position of the first signal and a frequency domain position of the first one of the multiple second signals. The terminal device may determine the frequency domain position of each second signal according to the frequency domain interval between two adjacent second signals and the frequency domain interval between the frequency domain position of the first signal and the frequency domain position of the first one of the multiple second signals.

It should be noted that the frequency domain interval between two adjacent second signals may be stipulated in a protocol or configured by a network, which is not limited in the embodiments of the present disclosure.

It should also be noted that for the fact that the first signal is associated with the second signals through a specified frequency domain interval, the reference may be made to the related description in the above embodiment, and the description thereof will not be repeated here for the sake of brevity.

In some embodiments, in a case that the first signal is associated with the second signal one-to-many, multiple second signals associated with the first signal may be configured to the same terminal device or the same terminal device group (which may also be referred to as a terminal device set).

It should be noted that, in this scenario, the first signal may include the second indication information. The second indication information is used for indicating a part of the multiple second signals, and the time domain resource and/or the frequency domain resource for detecting the second signal may be resource(s) in which the part of the second signals indicated by the second indication information is located.

It should be understood that in a case that the first signal is associated with multiple second signals, the network device may identify different monitoring combinations of second signals through the first signal. Exemplarily, one first signal may be associated with four second signals, and the first signal may indicate the first one and the third one of the four second signals, that is, the second signals are sent on time-frequency resources of the first one and the third one of the four second signals associated with the first signal.

The second indication information is determined based on a payload of the first signal or a sequence of the first signal.

It should be understood that the first signal may be a sequence signal or a signal carrying a payload (or referred to as control information). The second indication information may indicate a part of the multiple second signals through different sequences or different carried control information. Exemplarily, the first signal may carry 4-bit control information. Here, 1010 may indicate that the second signals are sent on the time-frequency resources of the first one and the third one of the four second signals associated with the first signal.

In some embodiments, in a case that the first signal is associated with the second signal one-to-many, the multiple signals associated with the first signal may be configured to different terminal devices or different terminal device groups (which may also be referred to as terminal device sets).

That is, different terminal devices or different terminal device groups correspond to different second signals among the multiple second signals through the first signal.

In one possible implementation, different terminal devices/different terminal device groups may be configured with different time intervals and/or different frequency domain intervals. That is, different terminal devices or different terminal device groups are configured with different specified time intervals, and/or frequency domain intervals to correspond to different second signals among the multiple second signals. In this way, when different terminal devices or different terminal device groups detect the same first signal, different second signals among the multiple second signals may be determined according to different configured time intervals and/or frequency domain intervals.

For example, referring to FIG. 8, one first signal may be associated with two second signals, and the network device may configure different specified time intervals for different terminal devices/terminal device groups. Here, ΔT1 may be configured for the terminal device 1, and ΔT2 may be configured for the terminal device 2. In this way, when the first signal is detected by the terminal device 1, the terminal device 1 may determine the time-frequency position of the second signal 1 according to ΔT1, and detect the second signal 1. When the same first signal is detected by the terminal device 2, the terminal device 2 may determine the time-frequency position of the second signal 2 according to ΔT2, and detect the second signal 2.

In another possible implementation, different terminal devices/different terminal device groups may be configured with different index values of the second signals. Different terminal devices or different terminal device groups are configured with different index values to correspond to different second signals among the multiple second signals.

It should be noted that the index values of the second signals may refer to the index values of multiple second signals associated with the first signal.

For example, referring to FIG. 8, one first signal may be associated with two second signals, and the network device may configure different index values of the second signals for different terminal devices/terminal device groups. The index value of 0 may be configured for the terminal device 1, and the index value of 1 may be configured for the terminal device 2. In this way, when the first signal is detected by the terminal device 1, the terminal device 1 may determine the time-frequency position of the second signal 1 according to the configured index value of 0, and detect the second signal 1. When the same first signal is detected by the terminal device 2, the terminal device 2 may determine the time-frequency position of the second signal 2 according to the configured index value of 1, and detect the second signal 2.

In summary, the terminal device may firstly detect/monitor the first signal before detecting/monitoring the second signal(s). If the first signal is not detected, the terminal device may not detect the second signal(s). In this way, the terminal device can avoid continuously monitoring the second signal(s), so as to reduce power consumption of the terminal device. If the first signal is detected, the terminal device may detect/monitor the second signal(s) on corresponding time domain and/or frequency domain resource(s) according to the association relationship between the first signal and the second signal(s). In this way, the terminal device can accurately determine the time-frequency position(s) for detecting the second signal(s), the clock drift is avoided to a certain extent, and the reliability of detecting the second signal(s) is improved.

In the embodiments of the present disclosure, the fact that the first signal is associated with the second signal many-to-one may include one or more of following: time domain resources of multiple first signals are associated with a time domain resource of the second signal; and frequency domain resources of the multiple first signals are associated with a frequency domain resource of the second signal.

In some embodiments, the fact that the time domain resources of the multiple first signals are associated with the time domain resource of the second signal may include any one of following: a time domain resource of a specified first signal among the multiple first signals is associated with a time domain resource of the second signal; or a time domain resource of each of the multiple first signals is associated with the time domain resource of the second signal.

It should be noted that the specified first signal may be the first one, the last one, or any one of the multiple first signals, which is not limited in the embodiments of the present disclosure.

In some embodiments, different first signals may have different index values. The first signal may carry an index value. In this way, the terminal device can determine the position of the first signal in the multiple first signals according to the index value carried in the first signal.

In some embodiments, the fact that the time domain resource of the specified first signal among the multiple first signals is associated with the time domain resource of the second signal may include that: a time domain length of the specified first signal is associated with the time domain length of the second signal, and/or a time domain position of the specified first signal is associated with the time domain position of the second signal.

It should be noted that for the fact that the time domain length of the specified first signal is associated with the time domain length of the second signal, the reference may be made to the related description in the above embodiment for one-to-one association between the first signal and the second signal, and the description thereof will not be repeated here for the sake of brevity.

In addition, the fact that the time domain position of the specified first signal is associated with the time domain position of the second signal may include that a time domain position of the specified first signal is associated with a time domain position of the second signal through a specified time interval.

Exemplarily, the network device may configure that a specified time interval between the first signal i of the multiple first signals and second signal is ΔT. When the first signal i is detected by the terminal device, the terminal device determines the time domain position for detecting the second signal according to the time domain position of the detected first signal i and ΔT that is configured by the network device.

It should be noted that for the fact that the time domain position of the specified first signal is associated with the time domain position of the second signal through a specified time interval, the reference may be made to the related description in the above embodiment for one-to-one association between the first signal and the second signal, and the description thereof will not be repeated here for the sake of brevity.

In some embodiments, the fact that the time domain resource of each of the multiple first signals is associated with the time domain resource of the second signal may include that: a time domain length of each of the multiple first signals is associated with the time domain length of the second signal, and/or a time domain position of each of the multiple first signals is associated with the time domain position of the second signal.

It should be understood that the time domain lengths of all of the multiple first signals are the same. The time domain length of the second signal associated with the multiple first signals may be the same as or different from the time domain lengths of the multiple first signals. When the time domain length of the second signal associated with the multiple first signals is different from the time domain lengths of the multiple first signals, the time domain length of the second signal may be determined through the time domain lengths of the multiple first signals in combination with the association relationship between the time domain lengths.

Here, the association relationship between time domain lengths may be stipulated in a protocol or may be configured in advance by a network device, which is not limited in the embodiments of the present disclosure.

In some embodiments, the fact that the time domain resource of each of the multiple first signals is associated with the time domain resource of the second signal may include that: time domain positions of the multiple first signals are respectively associated with a time domain position of the second signal through multiple specified time intervals, different second signals corresponding to different specified time intervals.

It should be understood that the network device may configure multiple specified time intervals respectively corresponding to multiple first signals. For different first signals, the same time domain position of the second signal may be determined according to the corresponding specified time intervals.

It should be noted that for the fact that the time domain position of each first signal is associated with the time domain position of the second signal through a specified time interval, the reference may be made to the related description in the above embodiment for one-to-one association between the first signal and the second signal, and the description thereof will not be repeated here for the sake of brevity.

In some embodiments, the fact that the frequency domain resources of the multiple first signals are associated with the frequency domain resource of the second signal may include that: frequency domain bandwidths of the multiple first signals are associated with the frequency domain bandwidth of the second signal, and/or frequency domain positions of the multiple first signals are associated with the frequency domain position of the second signal.

It should be understood that the frequency domain bandwidths of all of the multiple first signals are the same. The frequency domain bandwidth of the second signal associated with the multiple first signals may be the same as or different from the frequency domain bandwidths of the multiple first signals. When the frequency domain bandwidth of the second signal associated with the multiple first signals is different from the frequency domain bandwidths of the multiple first signals, the frequency domain bandwidth of the second signal may be determined through the frequency domain bandwidths of the multiple first signals in combination with the association relationship between frequency domain bandwidths.

Here, the association relationship between frequency domain bandwidths may be stipulated in the protocol or may be configured in advance by the network device, which is not limited in the embodiments of the present disclosure.

In addition, the fact that the time domain position of the specified first signal is associated with the time domain position of the second signal may include that: the frequency domain positions of the multiple first signals are all the same, and the frequency domain positions of the multiple first signals are associated with the frequency domain position of the second signal through a specified frequency domain interval.

It should be understood that the frequency domain positions of the multiple first signals are the same, and the frequency domain positions of the multiple first signals are associated with the frequency domain position of the second signal through the same specified frequency domain interval.

It should be noted that for the fact that the frequency domain position of the first signal is associated with the frequency domain position of the second signal through the specified frequency domain interval, the reference may be made to the related description in the above embodiment for one-to-one association between the first signal and the second signal, and the description thereof will not be repeated here for the sake of brevity.

In some embodiments, the multiple first signals may constitute the first signal set, and a many-to-one mapping between the first signal and the second signal may be that the first signal set is associated with the second signal.

The fact that first signal set is associated with the second signal may bet that a specified first signal in the first signal set is associated with the second signal. Alternatively, the fact that the first signal set is associated with the second signal may be that each first signal in the first signal set is associated with the second signal, which is not limited in the embodiments of the present disclosure.

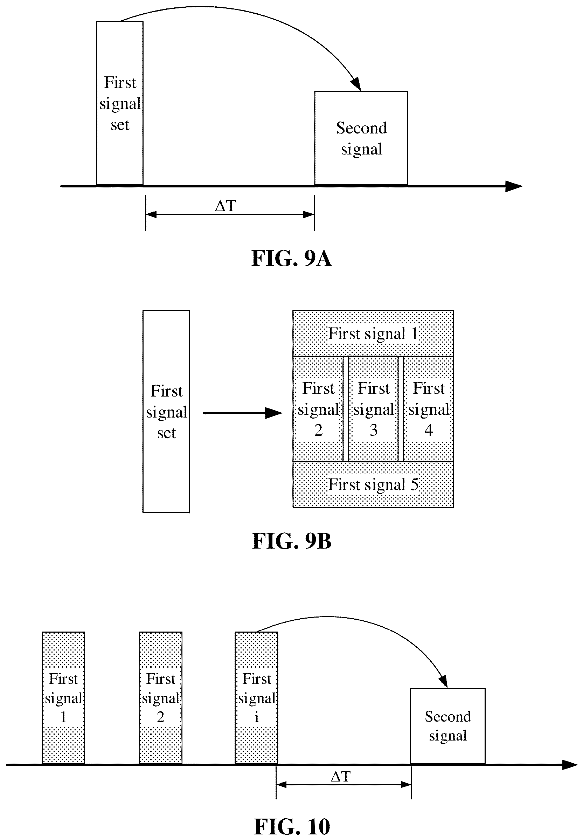

Exemplarily, referring to FIG. 9A, the first signal set may be associated with the second signal through a specified time interval ΔT. Referring to FIG. 9B, the first signal set may include five first signals. As illustrated in combination with FIG. 9A and FIG. 9B, the fact that the first signal set is associated with the second signal may be that a position between the time domain end position of the first signal 1 in the first signal set and the time domain starting position of the second signal is ΔT.

It may be understood that when the first signal is associated with the second signal many-to-one, referring to FIG. 10, the network device may send multiple first signals before sending the second signal. The multiple first signals may be associated with one second signal. The multiple first signals not only may be used for determining whether to detect the second signal, and/or used for determining the time-frequency resource for detecting the second signal, but also may be used for clock calibration and/or time-frequency synchronization.

It should be noted that the terminal device needs to perform clock calibration and/or time-frequency synchronization before detecting or receiving the second signal, so as to ensure the accuracy of detecting the second signal. However, in the case of poor channel quality, the terminal device performs clock calibration and/or time-frequency synchronization only by one detected first signal, and cannot perform accurate clock calibration and/or time-frequency synchronization. Based on this, the network device may send multiple first signals before sending the second signal. In this way, the terminal device may detect multiple first signals to complete clock calibration and/or time-frequency synchronization, and determine a time-frequency position for detecting the second signal according to a specific one or any one of the detected multiple first signals, thus the accuracy of detecting the second signal can be improved.

Another manner for the network device to send the first signal is described in detail below.

### Manner 2

The network device sends the first signal and the second signal independently, that is, the first signal and the second signal are independent from each other, and the sending of the first signal is independent of the sending of the second signal. Accordingly, the terminal device expects that the sending of the first signal is independent of the sending of the second signal.

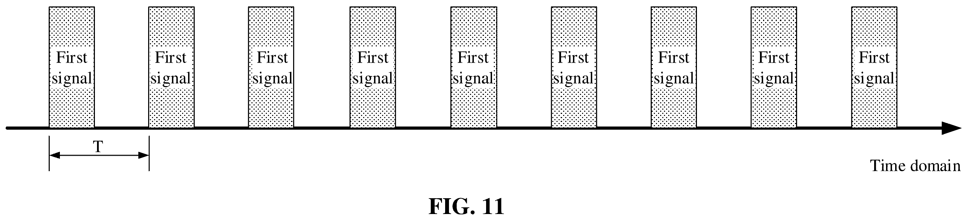

In some embodiments, the first signal may be transmitted according to a specified time period. Exemplarily, referring to FIG. 11, the network device may send the first signal according to the time period T.

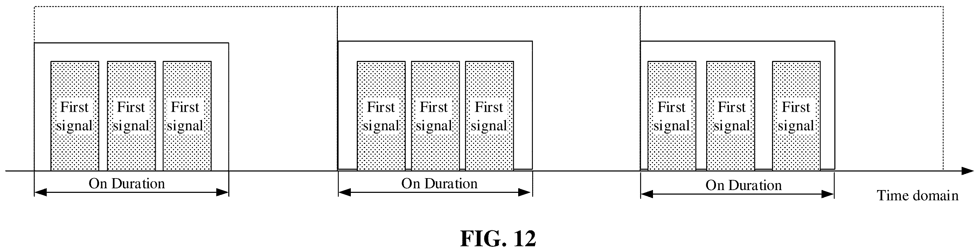

In other embodiments, the first signal may be transmitted in a continuous transmission time period (On Duration) within each transmission cycle in DRX cycles. Exemplarily, referring to FIG. 12, the network device may consecutively transmit three first signals in the On Duration in a DRX cycle.

It should be understood that in a case that the network device independently sends the first signal and the second signal, the terminal device may determine whether to detect the second signal according to the first indication information carried in the first signal.

In a case that the first indication information in the first signal indicates the first value, the terminal device determines to detect the second signal, and/or determines the time domain resource and/or the frequency domain resource for detecting the second signal based on the first signal.

In a case that the first indication information in the first signal indicates the second value, the terminal device determines not to detect the second signal.

In some embodiments, the first indication information in the first signal may be determined based on one or more of: a sequence of first signal; a payload of the first signal; a structure of the first signal; a duration of the first signal; and a waveform of the first signal.

It should be understood that the first signal may be a sequence signal or a signal carrying a payload, which is not limited in the embodiments of the present disclosure.

In an example, the first signal is a sequence signal and different sequences corresponding to different first signals may be different. When the first sequence is detected by the terminal device, it may be determined that the second signal is not sent, and when the second sequence is detected by the terminal device, the terminal device detects the second signal.

In another example, the first signal is a signal carrying a payload, and different first signals carry different payloads. When it is detected by the terminal device that the value of the relevant indication field of the payload in the first signal is the first value, it may be determined that the second signal is not sent. When it is detected by the terminal device that the value of the relevant indication field of the payload in the first signal is the second value, the terminal device detects the second signal.

In yet another example, the structures of signals corresponding to different first signals may be different. Similar to the structure of the SSB, at least two kinds of structures of the first signal may be designed. When the first signal detected by the terminal device is of the first structure, it may be determined that the second signal is not sent, and it is not necessary to detect the second signal. When the detected first signal is of the second structure, the terminal device detects the second signal.

In another example, different first signals correspond to different durations. At least two first signals with different durations may be designed. When the duration of the first signal detected by the terminal device is the first duration, it may be determined that the second signal is not sent, and it is not necessary to detect the second signal. When the duration of the detected first signal is the second duration, the terminal device detects the second signal.

In yet another example, different first signals correspond to different waveforms. At least two kinds of first signals with different waveforms, such as an OOK waveform, an FSK waveform, or the like, may be designed. When the waveform of the first signal detected by the terminal device is the first waveform, it may be determined that the second signal is not sent, and it is not necessary to detect the second signal. When the waveform of the detected first signal is the second waveform, the terminal device detects the second signal.

In some embodiments, in a case that the network device independently sends the first signal and the second signal, the terminal device may further determine a time domain resource and/or a frequency domain resource for detecting the second signal according to the first signal.

It should be noted that the above determination of whether to detect the second signal according to the payload of the first signal may be regarded as an explicit indication. Other manners of determining whether to detect the second signal may be regarded as an implicit indication.

In some embodiments, the time domain resource and/or the frequency domain resource for the terminal device detecting the second signal is determined based on one or more of: a time domain resource between a current first signal and a detection of a next first signal; a time domain resource of non-on-duration in a DRX cycle in which the first signal is located; the first configuration information sent by the network device; provision(s) in a protocol; and the second association relationship between the first signal and the second signal.

In one possible implementation, the terminal device may detect the second signal on a resource on which the first signal is not transmitted. That is, the terminal device may detect the second signal within one or some detection windows (which may also be referred to as detection time windows).

In some embodiments, the terminal device may implicitly determine a detection window for detecting the second signal, or may explicitly determine a detection window for detecting the second signal in combination with the first configuration information sent by the network device or provision(s) in a protocol.

Implicitly determining, by the terminal device, the detection window for detecting the second signal may include that: the terminal device uses a time domain resource between the current first signal and the detection of the next first signal as a detection window for detecting the second signal; or the terminal device uses a time domain resource of non-on-duration in a DRX cycle in which the first signal is located as a detection window for detecting the second signal.

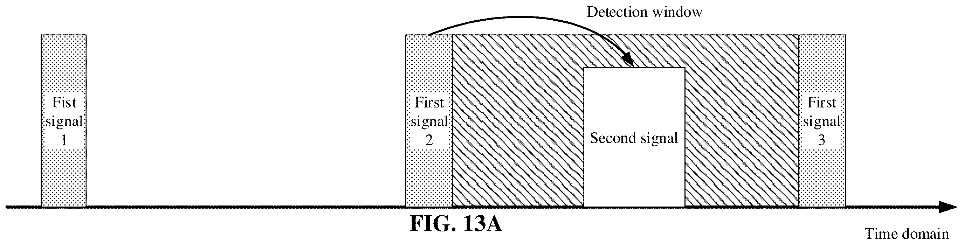

Exemplarily, referring to FIG. 13A, the first signal is periodically transmitted, and when the first signal 2 is detected by the terminal device to indicate detection of the second signal, the time domain resource between the first signal 2 and the first signal 3 may be used as a detection window for detecting the second signal.

In addition, explicitly determining, by the terminal device, the detection window for detecting the second signal may include: the terminal device determines a detection window for detecting the second signal according to the first configuration information sent by the network device; or the terminal device determines a detection window for detecting the second signal according to the provision in a protocol.

In some embodiments, the first configuration information and/or the provision(s) in the protocol includes one or more of: a length of a detection window of the second signal; a starting position of the detection window; and an end position of the detection window.

Here, the unit of the length of the detection window may be an absolute time, for example, m/ms/us, etc. The unit of the length of the detection time window may be a relative time length, for example, a symbol/slot/subframe, etc., which is not limited in the embodiments of the present disclosure.

The starting position of the detection window and/or the end position of the detection window may be determined through the time offset parameter and the reference point. The reference point may be a time domain starting position, a time domain end position, a time unit in which the time domain starting position is located, or a time unit in which the time domain end position is located, etc., of the first signal in which the first indication information indicating that the first value is detected, which is not limited in the embodiments of the present disclosure.

In addition, the starting position of the detection window and/or the end position of the detection window may be a time unit directly indicated by the network device/stipulated in the protocol. For example, the starting position of the detection window and/or the end position of the detection window may be a specific time unit in a slot.

It should be noted that if the next first signal is still a signal instructing to detect the second signal, the detection window for detecting the second signal may be extended, or the detection window for detecting the second signal may be regarded to be restarted.

It should be understood that the frequency domain resource of the detection window may be associated with the frequency domain resource of the first signal, and the terminal device may determine the frequency domain resource of the detection window according to the association relationship between frequency domain resources. For the specific association relationship, the reference may be made to related description in the above embodiments, which will not be repeatedly described here for the sake of brevity.

It should be noted that the terminal device may detect the second signal in the detection window in a sliding window manner. Within the detection window, the terminal device may slide the window at each sampling point. Compared with the prior art, in the embodiments of the present disclosure, the terminal device may detect the second signal on a resource on which the first signal is not transmitted, and the detection manner of the second signal is reduced, thereby reducing power consumption and detection complexity of the terminal device.

In another possible implementation, when the network device independently sends the first signal, the first signal may be associated with a specific second signal. That is, the terminal device may determine the time domain resource and/or the frequency domain resource for detecting the second signal according to the second association relationship between the first signal and the second signal.

The second association relationship includes any one of following: one first signal is associated with one second signal; or one first signal is associated with multiple second signals.

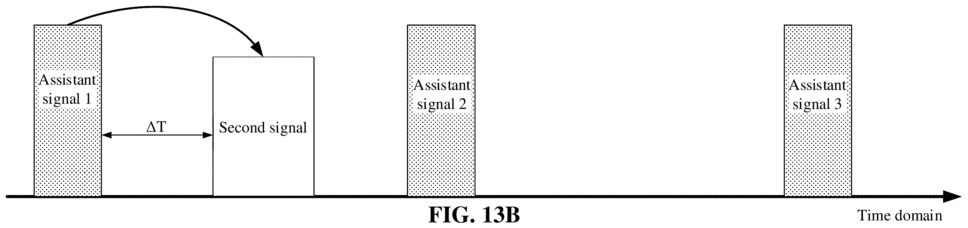

For example, referring to FIG. 13B, when it is detected by the terminal device that the first signal 1 indicates the presence of the second signal, the terminal device may find the time domain resource and/or the frequency domain resource of the second signal associated with the first signal 1 according to the specified time interval ΔT and the time domain resource and/or the frequency domain resource of the first signal 1.

It should be noted that for the fact that one first signal is associated with one second signal and/or one first signal is associated with multiple second signals, the reference may be made to the relevant description in the above embodiments, and the description thereof will not be repeated here for the sake of brevity.

It should be understood that the network device independently sends the first signal. Not only the first signal may be used for the terminal device to determine whether to detect the second signal, and/or the time domain resource and/or frequency domain resource for detecting the second signal, but also the first signal may be used by the terminal device to perform clock calibration and/or time-frequency synchronization, thereby avoiding the problem of clock offset resulting in inaccurate detection of the second signal.

In an embodiment of the present disclosure, the terminal device may detect the first signal on a fixed time-frequency resource, thereby determining whether to detect the second signal according to the detected first signal, and/or the time-frequency resource for detecting the second signal. The time domain resource and/or the frequency domain resource for the terminal device to detect the first signal may be determined based on one or more of: provision(s) in a protocol; the third configuration information sent by the network device; and the fourth configuration information sent by the network device. The third configuration information is used for configuring the time domain resource and/or frequency domain resource for detecting the first signal. The fourth configuration information is used for configuring time domain resource and/or frequency domain resource for detecting the second signal.

It should be understood that the time-frequency resource for the terminal device to detect the first signal may be stipulated in the protocol or configured by the network device. The time-frequency resource for detecting the first signal may be semi-statically or dynamically configured by the network device, which is not limited in the embodiments of the present disclosure.

In one possible implementation, the time-frequency resource for detecting the first signal may be explicitly configured. The network device may send the third configuration information to the terminal device, and the third configuration information may include the time domain resource and/or the frequency domain resource for detecting the first signal.

In another implementation, the time-frequency resource for detecting the first signal may be implicitly configured. The network device may send the fourth configuration information to the terminal device, and the fourth configuration information may include a time domain resource and/or a frequency domain resource for the terminal device to detect the second signal. The terminal device may determine the time domain resource and/or the frequency domain resource for detecting the first signal according to the association relationship between the first signal and the second signal and the time domain resource and/or the frequency domain resource for detecting the second signal.

It should be noted that for the association relationship between the first signal and the second signal, the reference is made to the related description in the above embodiments, and the description thereof will not be repeated here for the sake of brevity.

The preferred embodiments of the present disclosure have been described in detail above with reference to the accompanying drawings, but the present disclosure is not limited to the specific details in the above embodiments. Within the scope of the technical concept of the present disclosure, various simple modifications may be made to the technical solutions of the present disclosure, and these simple modifications all fall within the scope of protection of the present disclosure. For example, various specific technical features described in the above detailed embodiments may be combined in any suitable manner without contradiction, and various possible combinations will not be described separately in the present disclosure in order to avoid unnecessary repetition. For example, various different embodiments of the present disclosure may be combined arbitrarily, and as long as they do not violate the idea of the present disclosure, they should also be regarded as the disclosure of the present disclosure. For another example, on the premise that there is no conflict, respective embodiments described in the present disclosure and/or the technical features in respective embodiments may be arbitrarily combined with the prior art, and the technical solutions obtained after the combination should also fall within the scope of protection of the present disclosure.

It should also be understood that in various method embodiments of the present disclosure, the size of the sequence number of the above processes does not mean the sequence of execution, and the sequence of execution of each process should be determined by its function and internal logic, and should not constitute any limitation on the implementation of the embodiments of the present disclosure. In addition, in the embodiments of the present disclosure, the terms "downlink", "uplink", and "sidelink" are used to indicate the transmission direction of signals or data. The "downlink" is used to indicate that the transmission direction of signals or data is the first direction sent from the station to the UE of the cell, "uplink" is used to indicate that the transmission direction of signals or data is the second direction sent from the UE of the cell to the station, and "sidelink" is used to indicate that the transmission direction of signals or data is the third direction sent from the UE 1 to the UE 2. For example, "downlink signal" indicates that the transmission direction of the signal is the first direction. In addition, in the embodiments of the present disclosure, the term "and/or" is used only for representing one kind of association relationship between association objects, and represents that there may be three kinds of relationships. Specifically, A and/or B may represent three cases that A exists alone, A and B exist simultaneously, and B exists alone. In addition, the character "/" in the present disclosure generally represent that there is an "or" relationship between the association objects.

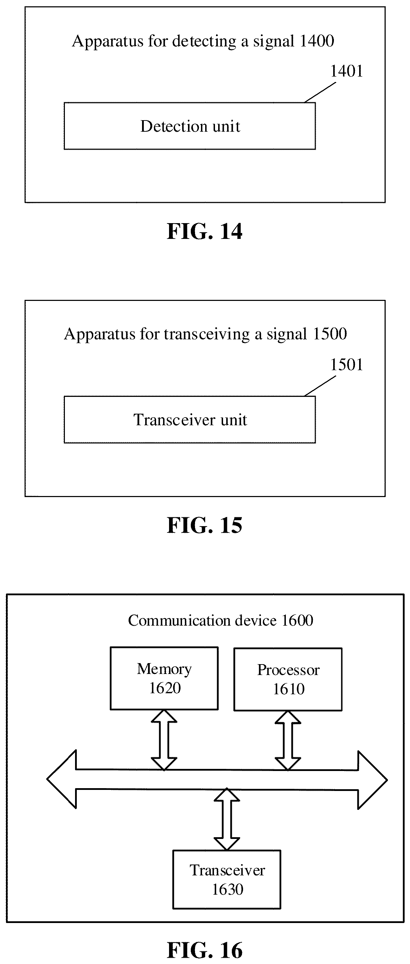

FIG. 14 is a schematic diagram of the structure and composition of an apparatus 1400 for signal detection according to an embodiment of the present disclosure. The apparatus is applied to a terminal device. As illustrated in FIG. 14, the apparatus for signal detection includes a detection unit 1401.

The detection unit 1401 is configured to detect the first signal. The first signal is used for determining whether to detect the second signal, and/or used for determining a time domain resource and/or a frequency domain resource for detecting the second signal. The second signal is used to wake up a main radio of the terminal device.

In some embodiments, power consumption required by the terminal device to detect the first signal is less than power consumption required to detect the second signal; a complexity of detecting the first signal by the terminal device is less than a complexity of detecting the second signal; a detection window of the first signal is smaller than a detection window of the second signal; a bandwidth of the first signal is less than a bandwidth of the second signal.

In some embodiments, the first signal is further used by the terminal device to perform clock calibration and/or time-frequency synchronization.

In some embodiments, the terminal device expects that a network device sends the first signal before sending the second signal.

In some embodiments, the apparatus 1400 for signal detection may further include a determination unit. The determination unit may be configured to, in a case that the first signal is detected, determine to detect the second signal, and/or determine, based on the first signal, the time domain resource and/or the frequency domain resource for detecting the second signal.

In some embodiments, the time domain resource and/or frequency domain resource for detecting the second signal is determined based on the first association relationship between the first signal and the second signal.

In some embodiments, the first association relationship includes any one of following: one first signal is associated with one second signal; one first signal is associated with multiple second signals; and multiple first signals are associated with one second signal.

In some embodiments, the first signal and the second signal are independent from each other, and the terminal device expects that sending of the first signal is independent of sending of the second signal.

In some embodiments, the first signal is transmitted according to a specified time period, or the first signal is transmitted in a on duration within each transmission cycle in DRX cycles.

In some embodiments, the determination unit is further configured to, in a case that the first indication information in the first signal indicates the first value, determine to detect the second signal, and/or determine, based on the first signal, the time domain resource and/or the frequency domain resource for detecting the second signal; and in a case that the first indication information in the first signal indicates the second value, determine not to detect the second signal.

In some embodiments, the first indication information is determined based on one or more of: a sequence of the first signal; a payload of the first signal; a structure of the first signal; a duration of the first signal; and a waveform of the first signal.

In some embodiments, the time domain resource and/or the frequency domain resource for detecting the second signal is determined based on one or more of: a time domain resource between the first signal and a detection of a next first signal; a domain resource of non-on-duration in a DRX cycle in which the first signal is located; first configuration information sent by a network device; provision(s) in a protocol; and the second association relationship between the first signal and the second signal.

In some embodiments, the first configuration information and/or the provision(s) in the protocol includes one or more of: a length of a detection window of the second signal; a starting position of the detection window; and an end position of the detection window.

In some embodiments, the second association relationship includes any one of following: one first signal is associated with one second signal; and one first signal is associated with multiple second signals.

In some embodiments, the fact that the one first signal is associated with the one second signal includes one or more of following: a time domain resource of the first signal is associated with a time domain resource of the second signal; and a frequency domain resource of the first signal is associated with a frequency domain resource of the second signal.

In some embodiments, the fact that the time domain resource of the first signal is associated with the time domain resource of the second signal includes one or more of following: a time domain length of the first signal is associated with a time domain length of the second signal; and a time domain position of the first signal is associated with a time domain position of the second signal.

In some embodiments, the time domain position of the first signal is associated with the time domain position of the second channel through a specified time interval.

In some embodiments, the fact that the frequency domain resource of the first signal is associated with the frequency domain resource of the second signal includes at least one of following: a frequency domain bandwidth of the first signal is associated with a frequency domain bandwidth of the second signal; or a frequency domain position of the first signal is associated with a frequency domain position of the second signal.

In some embodiments, the frequency domain position of the first signal is associated with the frequency domain position of the second signal through a specified frequency domain interval.

In some embodiments, the fact that the one first signal is associated with multiple second signals includes one or more of following: a time domain resource of the first signal is associated with time domain resources of the multiple second signals; and a frequency domain resource of the first signal is associated with frequency domain resources of the multiple second signals.

In some embodiments, the fact that the time domain resource of the first signal is associated with the time domain resources of the multiple second signals includes one or more of following: a time domain length of the first signal is associated with time domain lengths of the multiple second signals; and a time domain position of the first signal is associated with time domain positions of the multiple second signals.

In some embodiments, the time domain position of the first signal is respectively associated with the time domain positions of the multiple second signals through multiple specified time intervals. Different second signals correspond to different specified time intervals. Alternatively, the time domain position of the first signal is associated with the time domain positions of the multiple second signals through a specified time interval. A time interval between the time domain positions of any two adjacent second signals among the multiple second signals is the same.

In some embodiments, the fact that the frequency domain resource of the first signal is associated with the frequency domain resources of the multiple second signals includes one or more of following: a frequency domain bandwidth of the first signal is associated with frequency domain bandwidths of the multiple second signals; and a frequency domain position of the first signal is associated with frequency domain positions of the multiple second signals.

In some embodiments, the frequency domain position of the first signal is associated with the frequency domain positions of the multiple second signals through the same specified frequency domain interval. Alternatively, the frequency domain position of the first signal is associated with the frequency domain positions of the multiple second signals through multiple specified frequency domain intervals. Different second signals correspond to different specified frequency domain intervals.

In some embodiments, the first signal includes the second indication information. The second indication information is used for indicating a part of the multiple second signals, and the time domain and/or frequency domain resource for detecting the second signal is time domain and/or frequency domain resource(s) in which the part of second signals indicated by the second indication information is located.

In some embodiments, the second indication information is determined based on a payload of the first signal or a sequence of the first signal.

In some embodiments, different terminal devices or different terminal device groups correspond to different second signals among the multiple second signals through the first signal.

In some embodiments, different terminal devices or different terminal device groups are configured with different specified time intervals to correspond to different second signals among the multiple second signals. Alternatively, different terminal devices or different terminal device groups are configured with different index values to correspond to different second signals among the multiple second signals.

In some embodiments, the fact that the multiple first signals is associated with the one second signal includes one or more of following: time domain resources of the multiple first signals are associated with a time domain resource of the second signal; and frequency domain resources of the multiple first signals are associated with a frequency domain resource of the second signal.

In some embodiments, the fact that the time domain resources of the multiple first signals are associated with the time domain resource of the second signal includes any one of following: a time domain resource of a specified first signal among the multiple first signals is associated with the time domain resource of the second signal; and a time domain resource of each of the multiple first signals is associated with the time domain resource of the second signal.

In some embodiments, a time domain position of the specified first signal is associated with a time domain position of the second signal through a specified time interval.

In some embodiments, time domain positions of the multiple first signals are respectively associated with a time domain position of the second signal through multiple specified time intervals. Different first signals correspond to different specified time intervals.

In some embodiments, frequency domain positions of the multiple first signals are all the same, and the frequency domain positions of the multiple first signals are associated with a frequency domain position of the second signal through a specified frequency domain interval.

In some embodiments, the time domain position of the first signal and/or the time domain position of the second signal includes any one of: a time domain starting position; a time domain end position; a time unit in which the time domain starting position is located; or a time unit in which the time domain end position is located.

In some embodiments, the frequency domain position of the first signal and/or the frequency domain position of the second signal includes any one of: a position of a frequency domain center frequency; a frequency domain starting position; a frequency domain end position; a frequency domain unit in which the frequency domain starting position is located; or a frequency domain unit in which the frequency domain end position is located.

In some embodiments, the specified time interval and/or the specified frequency domain interval is determined based on one or more of: a preset rule; provision(s) in a protocol; and the second configuration information sent by the network device. The second configuration information is carried by dedicated signaling or carried by the first signal.

In some embodiments, a time domain resource and/or a frequency domain resource for detecting the first signal is determined based on one or more of: predefinition in a protocol; the third configuration information sent by a network device; and the fourth configuration information sent by the network device. The third configuration information is used for configuring the time domain resource and/or the frequency domain resource for detecting the first signal. The fourth configuration information is used for configuring the time domain resource and/or the frequency domain resource for detecting the second signal.

Those skilled in the art should understand that the related description of the above apparatus for detecting the signal according to the embodiment of the present disclosure may be understood with reference to the related description of the method for detecting the signal according to the embodiment of the present disclosure.

FIG. 15 is a schematic diagram of the structure and composition of an apparatus 1500 for signal transceiving according to an embodiment of the present disclosure. The apparatus is applied to a network device. As illustrated in FIG. 15, the apparatus for signal transceiving includes a transceiver unit 1501.

The transceiver unit 1501 is configured to send the first signal. The first signal is used for a terminal device to determine whether to detect the second signal, and/or to determine a time domain resource and/or a frequency domain resource for detecting the second signal. The second signal is used to wake up a main radio of the terminal device.

In some embodiments, power consumption required by the terminal device to detect the first signal is less than power consumption required to detect the second signal; a complexity of detecting the first signal by the terminal device being less than a complexity of detecting the second signal; a detection window of the first signal is smaller than a detection window of the second signal; or a bandwidth of the first signal is less than a bandwidth of the second signal.

In some embodiments, the first signal is further used by the terminal device to perform clock calibration and/or time-frequency synchronization.

In some embodiments, the transceiver unit 1501 sends the first signal before sending the second signal.

In some embodiments, the first signal has the first association relationship with the second signal, and the first association relationship is used to determine the time domain resource and/or the frequency domain resource for detecting the second signal.

In some embodiments, the first association relationship includes any one of following: one first signal is associated with one second signal; one first signal is associated with multiple second signals; or multiple first signals are associated with one second signal.

In some embodiments, the first signal and the second signal are independent from each other, and sending of the first signal is independent of sending of the second signal.

In some embodiments, the first signal is transmitted according to a specified time period, or the first signal is transmitted in a continuous transmission time period within each transmission cycle in DRX cycles.

In some embodiments, in a case that the first indication information in the first signal indicates the first value, the first signal is used to instruct the terminal device to detect the second signal, and/or to indicate the time domain resource and/or the frequency domain resource for detecting the second signal.

In a case that the first indication information in the first signal indicates the second value, the first signal is used to instruct the terminal device not to detect the second signal.

In some embodiments, the first indication information is determined based on one or more of: a sequence of the first signal; a payload of the first signal; a structure of the first signal; a duration of the first signal; and a waveform of the first signal.

In some embodiments, the transceiver unit 1501 is further configured to send the first configuration information to the terminal device. The first configuration information includes one or more of: a length of a detection window of the second signal; a starting position of the detection window; and an end position of the detection window.

In some embodiments, the first signal has the second association relationship with the second signal, and the second association relationship is used to determine the time domain resource and/or the frequency domain resource for detecting the second signal.

In some embodiments, the second association relationship includes any one of following: one first signal being associated with one second signal; or one first signal being associated with multiple second signals.

In some embodiments, the fact that the one first signal being associated with the one second signal includes one or more of following: a time domain resource of the first signal is associated with a time domain resource of the second signal; and a frequency domain resource of the first signal is associated with a frequency domain resource of the second signal.

In some embodiments, the fact that the time domain resource of the first signal is associated with the time domain resource of the second signal includes one or more of following: a time domain length of the first signal is associated with a time domain length of the second signal; and a time domain position of the first signal is associated with a time domain position of the second signal.

In some embodiments, the time domain position of the first signal is associated with the time domain position of the second channel through a specified time interval.

In some embodiments, the fact that the frequency domain resource of the first signal is associated with the frequency domain resource of the second signal includes at least one of following: a frequency domain bandwidth of the first signal is associated with a frequency domain bandwidth of the second signal; or a frequency domain position of the first signal is associated with a frequency domain position of the second signal.

In some embodiments, the frequency domain position of the first signal is associated with the frequency domain position of the second signal through a specified frequency domain interval.

In some embodiments, the fact that the one first signal is associated with the multiple second signals includes any one of following: a time domain resource of the first signal is associated with time domain resources of the multiple second signals; or a frequency domain resource of the first signal is associated with frequency domain resource of the multiple second signals.

In some embodiments, the fact that the time domain resource of the first signal is associated with the time domain resources of the multiple second signals includes one or more of following: a time domain length of the first signal is associated with time domain lengths of the multiple second signals; and a time domain position of the first signal is associated with time domain positions of the multiple second signals.

In some embodiments, the fact that the time domain position of the first signal is associated with the time domain positions of the multiple second signals includes that: the time domain position of the first signal is respectively associated with the time domain positions of the multiple second signals through multiple specified time intervals, different second signals corresponding to different specified time intervals; or the time domain position of the first signal is associated with the time domain positions of the multiple second signals through a specified time interval, a time interval between time domain positions of any two adjacent second signals among the multiple second signals being the same.

In some embodiments, the fact that the frequency domain resource of the first signal is associated with the frequency domain resources of the multiple second signals includes one or more of following: a frequency domain bandwidth of the first signal is associated with frequency domain bandwidths of the multiple second signals; and a frequency domain position of the first signal is associated with frequency domain positions of the multiple second signals.

In some embodiments, the fact that the frequency domain position of the first signal is associated with the frequency domain positions of the multiple second signals includes that: the frequency domain position of the first signal is associated with the frequency domain positions of the multiple second signals through the same specified frequency domain interval; or the frequency domain position of the first signal is associated with the frequency domain positions of the multiple second signals through multiple specified frequency domain intervals, different second signals corresponding to different specified frequency domain intervals.

In some embodiments, the first signal includes the second indication information. The second indication information is used for indicating a part of the multiple second signals, and the resource for detecting the second signal is resource(s) in which the part of second signals indicated by the second indication information is located.

In some embodiments, the second indication information is determined based on a payload of the first signal or a sequence of the first signal.

In some embodiments, different terminal devices or different terminal device groups correspond to different second signals among the multiple second signals through the first signal.

In some embodiments, different terminal devices or different terminal device groups are configured with different specified time intervals to correspond to different second signals among the multiple second signals; or different terminal devices or different terminal device groups are configured with different index values to correspond to different second signals among the multiple second signals.

In some embodiments, the fact that the multiple first signals are associated with the one second signal includes one or more of following: time domain resources of the multiple first signals are associated with a time domain resource of the second signal; and frequency domain resources of the multiple first signals are associated with a frequency domain resource of the second signal.

In some embodiments, the fact that the time domain resources of the multiple first signals are associated with the time domain resource of the second signal includes any one of following: a time domain resource of a specified first signal among the multiple first signals is associated with the time domain resource of the second signal; or a time domain resource of each of the multiple first signals is associated with the time domain resource of the second signal.

In some embodiments, the time domain position of the specified first signal is associated with a time domain position of the second signal through a specified time interval.

In some embodiments, time domain positions of the multiple first signals are respectively associated with a time domain position of the second signal through multiple specified time intervals.

In some embodiments, frequency domain positions of the multiple first signals are all the same, and the frequency domain positions of the multiple first signals are associated with a frequency domain position of the second signal through a specified frequency domain interval.

In some embodiments, the time domain position of the first signal and/or the time domain position of the second signal includes one or more of: a time domain starting position; a time domain end position; a time unit in which the time domain starting position is located; and a time unit in which the time domain end position is located.

In some embodiments, the frequency domain position of the first signal and/or the frequency domain position of the second signal includes one or more of: a position of a frequency domain center frequency; a frequency domain starting position; a frequency domain end position; a frequency domain unit in which the frequency domain starting position is located; and a frequency domain unit in which the frequency domain end position is located.

In some embodiments, the transceiver unit 1501 is further configured to send the second configuration information to the terminal device. The second configuration information is used to configure the specified time interval and/or the specified frequency domain interval.

In some embodiments, the second configuration information is carried by dedicated signaling or carried by the first signal.

In some embodiments, the transceiver unit 1501 is further configured to send the third configuration information to the terminal device. The third configuration information is used for configuring a time domain resource and/or a frequency domain resource for detecting the first signal.

In some embodiments, the transceiver unit 1501 is further configured to send the fourth configuration information to the terminal device. The fourth configuration information is used for configuring the time domain resource and/or the frequency domain resource for detecting the second signal.

Those skilled in the art should understand that the related description of the above apparatus for transceiving the signal according to the embodiment of the present disclosure may be understood with reference to the related description of the method for signal detection according to the embodiment of the present disclosure.

FIG. 16 is a schematic structural diagram of a communication device 1600 according to an embodiment of the present disclosure. The communication device may be a terminal device, or a network device. The communication device 1600 illustrated in FIG. 16 includes a processor 1610. The processor 1610 may invoke and execute a computer program from a memory to implement the methods in the embodiments of the present disclosure.

Alternatively, as illustrated in FIG. 16, the communication device 1600 may further include a memory 1620. Here, the processor 1610 may invoke and execute a computer program from the memory 1620 to implement the methods in the embodiments of the present disclosure.

The memory 1620 may be a separate device independent of the processor 1610 or may be integrated in the processor 1610.

Alternatively, as illustrated in FIG. 16, the communication device 1600 may further include a transceiver 1630. The processor 1610 may control the transceiver 1630 to communicate with other devices, specifically, may send information or data to other devices, or receive information or data sent by other devices.

The transceiver 1630 may include a transmitter and a receiver. The transceiver 1630 may further include one or more antennas.

Alternatively, the communication device 1600 may specifically be the network device according to the embodiment of the present disclosure, and the communication device 1600 may implement corresponding processes implemented by the network device in respective methods according to the embodiments of the present disclosure, which will not be described repeatedly herein for the sake of conciseness.

Alternatively, the communication device 1600 may specifically be a mobile terminal/terminal device according to the embodiment of the present disclosure, and the communication device 1600 may implement corresponding processes implemented by the mobile terminal/terminal device in respective methods according to the embodiments of the present disclosure, which will not be described repeatedly herein for the sake of conciseness.

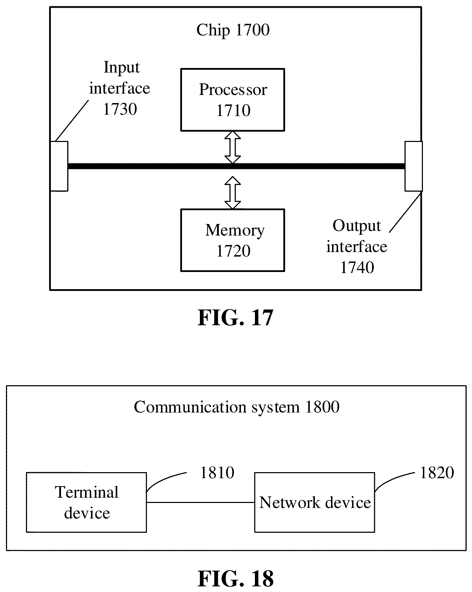

FIG. 17 is a schematic structural diagram of a chip according to an embodiment of the present disclosure. The chip 1700 illustrated in FIG. 17 includes a processor 1710. The processor 1710 may invoke and execute a computer program from a memory to implement the methods in the embodiments of the present disclosure.

Alternatively, as illustrated in FIG. 17, the chip 1700 may further include a memory 1720. Here, the processor 1710 may invoke and execute a computer program from the memory 1720 to implement the methods in the embodiments of the present disclosure.

The memory 1720 may be a separate device independent of the processor 1710 or may be integrated in the processor 1710.

Alternatively, the chip 1700 may further include an input interface 1730. The processor 1710 may control the input interface 1730 to communicate with other devices or chips, specifically, may acquire information or data sent by other devices or chips.

Alternatively, the chip 1700 may further include an output interface 1740. The processor 1710 may control the output interface 1740 to communicate with other devices or chips, specifically, may output information or data to other devices or chips.

Alternatively, the chip may be applied to the network device in the embodiments of the present disclosure, and the chip may implement the corresponding processes implemented by the network device in respective methods of the embodiments of the present disclosure, which are not described repeatedly herein for the sake of conciseness.

Alternatively, the chip may be applied to the mobile terminal/terminal device in the embodiments of the present disclosure, and the chip may implement the corresponding processes implemented by the mobile terminal/terminal device in respective methods of the embodiments of the present disclosure, which are not described repeatedly herein for the sake of conciseness.

It should be understood that the chip mentioned in the embodiments of the present disclosure may also be referred to as a system level chip, a system chip, a chip system, or a system-on-chip.

FIG. 18 is a schematic block diagram of a communication system 1800 according to an embodiment of the present disclosure. As illustrated in FIG. 18, the communication system 1800 includes the terminal device 1810 and the network device 1820.

Here, the terminal device 1810 may be used to implement the corresponding functions implemented by the terminal device in the above methods, and the network device 1820 may be used to implement the corresponding functions implemented by the network device in the above methods, which are not described repeatedly herein for the sake of conciseness.

It should be understood that the processor of the embodiment of the present disclosure may be an integrated circuit chip having signal processing capabilities. In the implementation process, the operations of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general-purpose processor may be a microprocessor or the processor may be any conventional processor or the like. The steps of the method disclosed in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory, and combines its hardware to complete the operations of the above method.

It is understood that the memory in the embodiments of the present disclosure may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration, but not by way of limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in the embodiments of the present disclosure may also be a SRAM, a DRAM, a SDRAM, a DDR SDRAM, an ESDRAM, a SLDRAM, a DR RAM, and the like. That is, the memory in the embodiments of the present disclosure is intended to include, but is not limited to, these and any other suitable type of memory.

Embodiments of the present disclosure further provide a computer readable storage medium for storing a computer program.

Alternatively, the computer readable storage medium may be applied to the network device in the embodiments of the present disclosure, and the computer program causes the computer to execute the corresponding flows implemented by the network device in respective methods in the embodiments of the present disclosure, which are not described repeatedly herein for the sake of conciseness.

Alternatively, the computer readable storage medium may be applied to the mobile terminal/terminal device in the embodiments of the present disclosure, and the computer program causes the computer to execute the corresponding flows implemented by the mobile terminal/terminal device in respective methods of the embodiments of the present disclosure, which are not described repeatedly herein for the sake of conciseness.

Embodiments of the present disclosure further provide a computer program product including computer program instructions.

Alternatively, the computer program product may be applied to the network device in the embodiments of the present disclosure, and the computer program instruction causes the computer to execute the corresponding flows implemented by the network device in respective methods in the embodiments of the present disclosure, which are not described repeatedly herein for the sake of conciseness.

Alternatively, the computer program product may be applied to the mobile terminal/terminal device in the embodiments of the present disclosure, and the computer program instruction causes the computer to execute the corresponding flows implemented by the mobile terminal/terminal device in respective methods of the embodiments of the present disclosure, which are not described repeatedly herein for the sake of conciseness.

Embodiments of the present disclosure further provide a computer program.

Alternatively, the computer program may be applied to the network device in the embodiments of the present disclosure, and when the computer program is executed on the computer, the computer executes the corresponding processes implemented by the network device in respective methods in the embodiments of the present disclosure, which are not described repeatedly herein for the sake of conciseness.

Alternatively, the computer program may be applied to the mobile terminal/terminal device in the embodiments of the present disclosure, and when the computer program is executed on the computer, the computer executes the corresponding processes implemented by the mobile terminal/terminal device in respective methods of the embodiments of the present disclosure, which are not described repeatedly herein for the sake of conciseness.

Those of ordinary skill in the art will appreciate that the elements and algorithmic steps of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, apparatus, and units described above may refer to the corresponding processes in the aforementioned method embodiments, which will not be described herein for the sake of conciseness.

In several embodiments provided herein, it should be understood that the disclosed systems, apparatus, and methods may be implemented in other ways. For example, the apparatus embodiment described above is merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, apparatus or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solutions of the present embodiment.

In addition, various functional units in various embodiments of the present disclosure may be integrated in one processing unit, each unit may be physically present alone, or two or more units may be integrated in one unit.

The functions may be stored in a computer readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the operations of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely specific embodiments of the present disclosure, but the scope of protection of the present disclosure is not limited thereto, and any person skilled in the art may easily think of changes or substitutions within the technical scope disclosed in the present disclosure, which should be covered within the scope of protection of the present disclosure. Therefore, the scope of protection of the present disclosure should be based on the scope of protection of the claims.

## Claims

1. A method for signal detection, comprising:
detecting, by a terminal device, a first signal, wherein the first signal is used for determining whether to detect a second signal, and/or used for determining a time domain resource and/or a frequency domain resource for detecting the second signal, wherein the second signal is used to wake up a main radio of the terminal device.

2. The method of claim 1, further comprising at least one of:
power consumption required by the terminal device to detect the first signal being less than power consumption required to detect the second signal;
a complexity of detecting the first signal by the terminal device being less than a complexity of detecting the second signal;
a detection window of the first signal being smaller than a detection window of the second signal; or
a bandwidth of the first signal being less than a bandwidth of the second signal.

3. The method of claim 1 or 2, wherein the first signal is further used by the terminal device to perform clock calibration and/or time-frequency synchronization.

4. The method of any one of claims 1 to 3, wherein the terminal device expects that a network device sends the first signal before sending the second signal.

5. The method of claim 4, further comprising:
in a case that the first signal is detected, determining, by the terminal device, to detect the second signal, and/or determining, by the terminal device, based on the first signal, the time domain resource and/or the frequency domain resource for detecting the second signal.

6. The method of claim 5, wherein the time domain resource and/or frequency domain resource for detecting the second signal is determined based on a first association relationship between the first signal and the second signal.

7. The method of claim 6, wherein the first association relationship comprises any one of following:
one first signal is associated with one second signal;
one first signal is associated with a plurality of second signals; or
a plurality of first signals are associated with one second signal.

8. The method of any one of claims 1 to 3, wherein the first signal and the second signal are independent from each other, and the terminal device expects that sending of the first signal is independent of sending of the second signal.

9. The method of claim 8, wherein the first signal is transmitted according to a specified time period, or the first signal is transmitted in a on duration within each transmission cycle in discontinuous reception (DRX) cycles.

10. The method of claim 8 or 9, further comprising:
in a case that first indication information in the first signal indicates a first value, determining, by the terminal device, to detect the second signal, and/or determining, by the terminal device, based on the first signal, the time domain resource and/or the frequency domain resource for detecting the second signal; and
in a case that the first indication information in the first signal indicates a second value, determining, by the terminal device, not to detect the second signal.

11. The method of claim 10, wherein the first indication information is determined based on one or more of:
a sequence of the first signal;
a payload of the first signal;
a structure of the first signal;
a duration of the first signal; or
a waveform of the first signal.

12. The method of claim 10 or 11, wherein the time domain resource and/or the frequency domain resource for detecting the second signal is determined based on one or more of:
a time domain resource between the first signal and a detection of a next first signal;
a time domain resource of non-on-duration in a DRX cycle in which the first signal is located;
first configuration information sent by a network device;
provision(s) in a protocol; or
a second association relationship between the first signal and the second signal.

13. The method of claim 12, wherein the first configuration information and/or the provision(s) in the protocol comprises one or more of:
a length of a detection window of the second signal;
a starting position of the detection window; or
an end position of the detection window.

14. The method of claim 12 or 13, wherein the second association relationship comprises any one of following:
one first signal is associated with one second signal; or
one first signal is associated with a plurality of second signals.

15. The method of claim 7 or 14, wherein the fact that the one first signal is associated with the one second signal comprises one or more of following:
a time domain resource of the first signal is associated with a time domain resource of the second signal; or
a frequency domain resource of the first signal is associated with a frequency domain resource of the second signal.

16. The method of claim 15, wherein the fact that the time domain resource of the first signal is associated with the time domain resource of the second signal comprises one or more of following:
a time domain length of the first signal is associated with a time domain length of the second signal; or
a time domain position of the first signal is associated with a time domain position of the second signal.

17. The method of claim 16, wherein the fact that the time domain position of the first signal is associated with the time domain position of the second signal comprises that:
the time domain position of the first signal is associated with the time domain position of the second channel through a specified time interval.

18. The method of any one of claims 15 to 17, wherein the fact that the frequency domain resource of the first signal is associated with the frequency domain resource of the second signal comprises one or more of following:
a frequency domain bandwidth of the first signal is associated with a frequency domain bandwidth of the second signal; or
a frequency domain position of the first signal is associated with a frequency domain position of the second signal.

19. The method of claim 18, wherein the fact that the frequency domain position of the first signal is associated with the frequency domain position of the second signal comprises that:
the frequency domain position of the first signal is associated with the frequency domain position of the second signal through a specified frequency domain interval.

20. The method of claim 7 or 14, wherein the fact that the one first signal is associated with the plurality of second signals comprises one or more of following:
a time domain resource of the first signal is associated with time domain resources of the plurality of second signals; or
a frequency domain resource of the first signal is associated with frequency domain resources of the plurality of second signals.

21. The method of claim 20, wherein the fact that the time domain resource of the first signal is associated with the time domain resources of the plurality of second signals comprises one or more of following:
a time domain length of the first signal is associated with time domain lengths of the plurality of second signals; or
a time domain position of the first signal is associated with time domain positions of the plurality of second signals.

22. The method of claim 21, wherein the fact that the time domain position of the first signal is associated with the time domain positions of the plurality of second signals comprises that:
the time domain position of the first signal is associated with the time domain positions of the plurality of second signals respectively through a plurality of specified time intervals, wherein different second signals correspond to different specified time intervals; or
the time domain position of the first signal is associated with the time domain positions of the plurality of second signals through a specified time interval, wherein a time interval between time domain positions of any two adjacent second signals among the plurality of second signals is same.

23. The method of any one of claims 20 to 22, wherein the fact that the frequency domain resource of the first signal is associated with the frequency domain resources of the plurality of second signals comprises one or more of following:
a frequency domain bandwidth of the first signal is associated with frequency domain bandwidths of the plurality of second signals; or
a frequency domain position of the first signal is associated with frequency domain positions of the plurality of second signals.

24. The method of claim 23, wherein the fact that the frequency domain position of the first signal is associated with the frequency domain positions of the plurality of second signals comprises that:
the frequency domain position of the first signal is associated with the frequency domain positions of the plurality of second signals through a same specified frequency domain interval; or
the frequency domain position of the first signal is associated with the frequency domain positions of the plurality of second signals through a plurality of specified frequency domain intervals, wherein different second signals correspond to different specified frequency domain intervals.

25. The method of any one of claims 20 to 24, wherein
the first signal comprises second indication information, wherein the second indication information is used for indicating a part of the plurality of second signals, and the resource for detecting the second signal is resource(s) in which the part of second signals indicated by the second indication information is located.

26. The method of claim 25, wherein the second indication information is determined based on a payload of the first signal or a sequence of the first signal.

27. The method of any one of claims 20 to 26, wherein
different terminal devices or different terminal device groups correspond to different second signals among the plurality of second signals through the first signal.

28. The method of any of claims 20 to 26, wherein
different terminal devices or different terminal device groups are configured with different specified time intervals to correspond to different second signals among the plurality of second signals; or
different terminal devices or different terminal device groups are configured with different index values to correspond to different second signals among the plurality of second signals.

29. The method of claim 7, wherein the fact that the plurality of first signals is associated with the one second signal comprises one or more of following:
time domain resources of the plurality of first signals are associated with a time domain resource of the second signal; or
frequency domain resources of the plurality of first signals are associated with a frequency domain resource of the second signal.

30. The method of claim 29, wherein the fact that the time domain resources of the plurality of first signals are associated with the time domain resource of the second signal comprises one or more of following:
a time domain resource of a specified first signal among the plurality of first signals is associated with the time domain resource of the second signal; or
a time domain resource of each of the plurality of first signals is associated with the time domain resource of the second signal.

31. The method of claim 30, wherein the fact that the time domain resource of the specified first signal among the plurality of first signals is associated with the time domain resource of the second signal comprises that:
a time domain position of the specified first signal is associated with a time domain position of the second signal through a specified time interval.

32. The method of claim 30, wherein the fact that the time domain resource of each of the plurality of first signals is associated with the time domain resource of the second signal comprises that:
time domain positions of the plurality of first signals are respectively associated with a time domain position of the second signal through a plurality of specified time intervals, wherein different second signals correspond to different specified time intervals.

33. The method of any one of claims 29 to 32, wherein the fact that the frequency domain resources of the plurality of first signals are associated with the frequency domain resource of the second signal comprises that:
frequency domain positions of the plurality of first signals are all same, and the frequency domain positions of the plurality of first signals are associated with a frequency domain position of the second signal through a specified frequency domain interval.

34. The method of any one of claims 16, 17, 21, 22, 31, or 32, wherein the time domain position of the first signal and/or the time domain position of the second signal comprises one or more of:
a time domain starting position;
a time domain end position;
a time unit in which the time domain starting position is located; or
a time unit in which the time domain end position is located.

35. The method of any one of claims 18, 19, 22, 24, or 33, wherein the frequency domain position of the first signal and/or the frequency domain position of the second signal comprises one or more of:
a position of a frequency domain center frequency;
a frequency domain starting position;
a frequency domain end position;
a frequency domain unit in which the frequency domain starting position is located; or
a frequency domain unit in which the frequency domain end position is located.

36. The method of any one of claims 17, 19, 22, or 31 to 33, wherein the specified time interval, and/or the specified frequency domain interval is determined based on one or more of:
a preset rule;
provision(s) in a protocol; or
second configuration information sent by the network device, wherein the second configuration information is carried by dedicated signaling or carried by the first signal.

37. The method of any one of claims 1 to 36, wherein a time domain resource and/or a frequency domain resource for detecting the first signal is determined based on one or more of:
predefinition in a protocol;
third configuration information sent by a network device, the third configuration information being used for configuring the time domain resource and/or the frequency domain resource for detecting the first signal; or
fourth configuration information sent by the network device, the fourth configuration information being used for configuring the time domain resource and/or the frequency domain resource for detecting the second signal.

38. A method for signal monitoring, comprising:
sending, by a network device, a first signal, wherein the first signal is used for a terminal device to determine whether to detect a second signal, and/or to determine a time domain resource and/or a frequency domain resource for detecting the second signal, wherein the second signal is used to wake up a main radio of the terminal device.

39. The method of claim 38, further comprising at least one of:
power consumption required by the terminal device to detect the first signal being less than power consumption required to detect the second signal;
a complexity of detecting the first signal by the terminal device being less than a complexity of detecting the second signal;
a detection window of the first signal being smaller than a detection window of the second signal; or
a bandwidth of the first signal being less than a bandwidth of the second signal.

40. The method of claim 38 or 39, wherein the first signal is further used by the terminal device to perform clock calibration and/or time-frequency synchronization.

41. The method of any one of claims 38 to 40, wherein the network device sends the first signal before sending the second signal.

42. The method of claim 41, wherein the first signal has a first association relationship with the second signal, and the first association relationship is used to determine the time domain resource and/or the frequency domain resource for detecting the second signal.

43. The method of claim 42, wherein the first association relationship comprises any one of following:
one first signal is associated with one second signal;
one first signal is associated with a plurality of second signals; or
a plurality of first signals are associated with one second signal.

44. The method of any one of claims 38 to 40, wherein the first signal and the second signal are independent from each other, and sending of the first signal is independent of sending of the second signal.

45. The method of claim 44, wherein the first signal is transmitted according to a specified time period, or the first signal is transmitted in a continuous transmission time period within each transmission cycle in discontinuous reception (DRX) cycles.

46. The method of claim 44 or 45, wherein
in a case that first indication information in the first signal indicates a first value, the first signal is used to instruct the terminal device to detect the second signal, and/or to indicate the time domain resource and/or the frequency domain resource for detecting the second signal; and
in a case that the first indication information in the first signal indicates a second value, the first signal is used to instruct the terminal device not to detect the second signal.

47. The method of claim 46, wherein the first indication information is determined based on one or more of:
a sequence of the first signal;
a payload of the first signal;
a structure of the first signal;
a duration of the first signal; or
a waveform of the first signal.

48. The method of claim 46 or 47, further comprising:
sending, by the network device, first configuration information to the terminal device;
wherein the first configuration information comprises one or more of:
a length of a detection window of the second signal;
a starting position of the detection window; or
an end position of the detection window.

49. The method of any one of claims 46 to 48, wherein the first signal has a second association relationship with the second signal, and the second association relationship is used to determine the time domain resource and/or the frequency domain resource for detecting the second signal.

50. The method of claim 49, wherein the second association relationship comprises any one of following:
one first signal is associated with one second signal; or
one first signal is associated with a plurality of second signals.

51. The method of claim 43 or 50, wherein the fact that the one first signal is associated with the one second signal comprises one or more of following:
a time domain resource of the first signal is associated with a time domain resource of the second signal; or
a frequency domain resource of the first signal is associated with a frequency domain resource of the second signal.

52. The method of claim 51, wherein the fact that the time domain resource of the first signal is associated with the time domain resource of the second signal comprises one or more of following:
a time domain length of the first signal is associated with a time domain length of the second signal; or
a time domain position of the first signal is associated with a time domain position of the second signal.

53. The method of claim 52, wherein the fact that the time domain position of the first signal is associated with the time domain position of the second signal comprises that:
the time domain position of the first signal is associated with the time domain position of the second channel through a specified time interval.

54. The method of any one of claims 51 to 53, wherein the fact that the frequency domain resource of the first signal is associated with the frequency domain resource of the second signal comprises one or more of following:
a frequency domain bandwidth of the first signal is associated with a frequency domain bandwidth of the second signal; or
a frequency domain position of the first signal is associated with a frequency domain position of the second signal.

55. The method of claim 54, wherein the fact that the frequency domain position of the first signal is associated with the frequency domain position of the second signal comprises that:
the frequency domain position of the first signal is associated with the frequency domain position of the second signal through a specified frequency domain interval.

56. The method of claim 43 or 51, wherein the fact that the one first signal is associated with the plurality of second signals comprises one or more of following:
a time domain resource of the first signal is associated with time domain resources of the plurality of second signals; or
a frequency domain resource of the first signal is associated with frequency domain resources of the plurality of second signals.

57. The method of claim 56, wherein the fact that the time domain resource of the first signal is associated with the time domain resources of the plurality of second signals comprises one or more of following:
a time domain length of the first signal is associated with time domain lengths of the plurality of second signals; or
a time domain position of the first signal is associated with time domain positions of the plurality of second signals.

58. The method of claim 57, wherein the fact that the time domain position of the first signal being associated with the time domain positions of the plurality of second signals comprises that:
the time domain position of the first signal is associated with the time domain positions of the plurality of second signals respectively through a plurality of specified time intervals, wherein different second signals correspond to different specified time intervals; or
the time domain position of the first signal is associated with the time domain positions of the plurality of second signals through a specified time interval, wherein a time interval between time domain positions of any two adjacent second signals among the plurality of second signals is same.

59. The method of any one of claims 56 to 58, wherein the fact that the frequency domain resource of the first signal is associated with the frequency domain resources of the plurality of second signals comprises one or more of following:
a frequency domain bandwidth of the first signal is associated with frequency domain bandwidths of the plurality of second signals; or
a frequency domain position of the first signal is associated with frequency domain positions of the plurality of second signals.

60. The method of claim 59, wherein the fact that the frequency domain position of the first signal is associated with the frequency domain positions of the plurality of second signals comprises that:
the frequency domain position of the first signal is associated with the frequency domain positions of the plurality of second signals through a same specified frequency domain interval; or
the frequency domain position of the first signal is associated with the frequency domain positions of the plurality of second signals through a plurality of specified frequency domain intervals, wherein different second signals correspond to different specified frequency domain intervals.

61. The method of any one of claims 56 to 60, wherein
the first signal comprises second indication information, wherein the second indication information is used for indicating a part of the plurality of second signals, and the resource for detecting the second signal is resource(s) in which the part of second signals indicated by the second indication information is located.

62. The method of claim 61, wherein the second indication information is determined based on a payload of the first signal or a sequence of the first signal.

63. The method of any of claims 56 to 62, wherein
different terminal devices or different terminal device groups correspond to different second signals among the plurality of second signals through the first signal.

64. The method of any of claims 56 to 63, wherein
different terminal devices or different terminal device groups are configured with different specified time intervals to correspond to different second signals among the plurality of second signals; or
different terminal devices or different terminal device groups are configured with different index values to correspond to different second signals among the plurality of second signals.

65. The method of claim 43, wherein the fact that the plurality of first signals are associated with the one second signal comprises one or more of following:
time domain resources of the plurality of first signals are associated with a time domain resource of the second signal; or
frequency domain resources of the plurality of first signals are associated with a frequency domain resource of the second signal.

66. The method of claim 65, wherein the fact that the time domain resources of the plurality of first signals are associated with the time domain resource of the second signal comprises any one of following:
a time domain resource of a specified first signal among the plurality of first signals is associated with the time domain resource of the second signal; or
a time domain resource of each of the plurality of first signals is associated with the time domain resource of the second signal.

67. The method of claim 66, wherein the fact that the time domain resource of the specified first signal among the plurality of first signals is associated with the time domain resource of the second signal comprises that:
a time domain position of the specified first signal is associated with a time domain position of the second signal through a specified time interval.

68. The method of claim 66, wherein the fact that the time domain resource of each of the plurality of first signals being associated with the time domain resource of the second signal comprises that:
time domain positions of the plurality of first signals are respectively associated with a time domain position of the second signal through a plurality of specified time intervals.

69. The method of any one of claims 65 to 68, wherein the fact that the frequency domain resources of the plurality of first signals are associated with the frequency domain resource of the second signal comprises that:
frequency domain positions of the plurality of first signals are all same, and the frequency domain positions of the plurality of first signals are associated with a frequency domain position of the second signal through a specified frequency domain interval.

70. The method of any one of claims 52, 53, 57, 58, 67, or 68, wherein the time domain position of the first signal and/or the time domain position of the second signal comprises one or more of:
a time domain starting position;
a time domain end position;
a time unit in which the time domain starting position is located; or
a time unit in which the time domain end position is located.

71. The method of any one of claims 54, 55, 59, 60, or 69, wherein the frequency domain position of the first signal and/or the frequency domain position of the second signal comprises one or more of:
a position of a frequency domain center frequency;
a frequency domain starting position;
a frequency domain end position;
a frequency domain unit in which the frequency domain starting position is located; or
a frequency domain unit in which the frequency domain end position is located.

72. The method of any one of claims 53, 55, 58, 60, or 67 to 69, further comprising:
sending, by the network device, second configuration information to the terminal device, wherein the second configuration information is used to configure the specified time interval and/or the specified frequency domain interval.

73. The method of claim 72, wherein the second configuration information is carried by dedicated signaling or carried by the first signal.

74. The method of any one of claims 38 to 73, further comprising:
sending, by the network device, third configuration information to the terminal device, wherein the third configuration information is used for configuring a time domain resource and/or a frequency domain resource for detecting the first signal.

75. The method of any one of claims 38 to 74, further comprising:
sending, by the network device, fourth configuration information to the terminal device, wherein the fourth configuration information is used for configuring the time domain resource and/or the frequency domain resource for detecting the second signal.

76. An apparatus for signal detection, applied to a terminal device, comprising:
a detection unit, configured to detect a first signal, wherein the first signal is used for determining whether to detect a second signal, and/or used for determining a time domain resource and/or a frequency domain resource for detecting the second signal, wherein the second signal is used to wake up a main radio of the terminal device.

77. An apparatus for signal transceiving, applied to a network device, comprising:
a transceiver unit, configured to send a first signal, wherein the first signal is used for a terminal device to determine whether to detect a second signal, and/or to determine a time domain resource and/or a frequency domain resource for detecting the second signal, wherein the second signal is used to wake up a main radio of the terminal device.

78. A terminal device, comprising:
a memory, configured to store instructions executable on a computer; and
a processor, coupled to the memory, and configured to implement the method of any one of claims 1 to 37 by executing the instructions executable on the computer.

79. A network device, comprising:
a memory, configured to store instructions executable on a computer; and
a processor, coupled to the memory, and configured to implement the method of any one of claims 38 to 75 by executing the instructions executable on the computer.

80. A chip comprising:
a processor, configured to invoke and execute a computer program from a memory to cause a device on which the chip is mounted to perform the method of any one of claims 1 to 37, or to perform the method of any one of claims 38 to 75.

81. A computer readable storage medium storing a computer program that, when executed by at least one processor, implements the method of any one of claims 1 to 37, or implements the method of any one of claims 38 to 75.

82. A computer program product comprising a computer storage medium storing a computer program, wherein the computer program comprises instructions executable by at least one processor that, when executed by the at least one processor, implement the method of any one of claims 1 to 37, or implement the method of any one of claims 38 to 75.

83. A computer program causing a computer to perform the method of any one of claims 1 to 37 or to implement the method of any one of claims 38 to 75.
